# EUROPEAN PATENT APPLICATION

(11) **EP 4 641 657 A1**
(43) Date of publication of application: **29.10.2025**
(21) Application number: 23906953.7
(22) Date of filing: 18.12.2023
(51) Int. Cl.: H01M 4/133, H01M 4/134, H01M 4/36, H01M 4/40, H01M 4/587, H01M 4/62, H01M 4/66, H01M 10/054, H01M 10/0585

(54) **NEGATIVE ELECTRODE FOR SODIUM-ION SECONDARY BATTERIES, AND SODIUM-ION SECONDARY BATTERY**

(30) Priority: 20.12.2022 JP 2022203399
(71) Applicant: Nippon Electric Glass Co., Ltd., Otsu-shi, Shiga 520-8639 (JP)
(72) Inventor: YAMAUCHI, Hideo, Otsu-shi, Shiga 520-8639 (JP); TSUNODA, Kei, Otsu-shi, Shiga 520-8639 (JP); NAGAKANE, Tomohiro, Otsu-shi, Shiga 520-8639 (JP)
(74) Representative: Tetzner, Michael
(86) International application number: PCT/JP2023/045220
(87) International publication number: WO 2024/135593

(57) **Abstract**

Provided is a negative electrode for a sodium-ion secondary battery that can improve the initial charge-discharge efficiency of the secondary battery. A negative electrode for a sodium-ion secondary battery contains: a first negative-electrode active material containing a carbon material; and a second negative-electrode active material containing a sodium-containing alloy.

## Description

### [Technical Field]

The present invention relates to negative electrodes for sodium-ion secondary batteries and sodium-ion secondary batteries using the negative electrodes for sodium-ion secondary batteries.

### [Background Art]

Lithium-ion secondary batteries are essential for mobile devices, electric vehicles, and so on and have secured their place as high-capacity and light-weight power sources for these devices, vehicles, and so on. However, current lithium-ion secondary batteries employ as their electrolytes, mainly, combustible organic electrolytic solutions, which raises concerns about the risk of burning or explosion. As a solution to this problem, all-solid-state batteries, such as all-solid-state lithium-ion batteries, in which a solid electrolyte is used instead of an organic electrolytic solution have been under development. However, oxide-based solid electrolytes having lithium-ion conductivity are low in ionic conductivity and therefore have a problem of difficulty in operating at low temperatures and producing high power. Therefore, as alternatives to all-solid-state lithium-ion secondary batteries, all-solid-state sodium-ion secondary batteries using an oxide-based solid electrolyte having sodium-ion conductivity are being developed (see, for example, Patent Literature 1).

### [Citation List]

### [Patent Literature]

[PTL 1]
JP-A-2010-15782

### [Summary of Invention]

### [Technical Problem]

There is known, as an all-solid-state sodium-ion secondary battery, a rocking chair battery in which a material containing sodium ions serving as carrier ions is used as a positive-electrode active material and a material free of sodium ions is used as a negative-electrode active material. As negative-electrode active materials as just described, carbon materials, such as graphite and hard carbon, are known.

However, in the rocking chair sodium-ion secondary battery, an undesirable side reaction may occur during initial charge, sodium ions may be thus trapped in the negative electrode, and the sodium ions may not return to the positive electrode during discharge. In this case, there arise a problem that an initial irreversible capacity is produced and, thus, the initial charge-discharge efficiency, which is the ratio of the initial discharge capacity to the initial charge capacity, decreases.

An object of the present invention is to provide: a negative electrode for a sodium-ion secondary battery that can improve the initial charge-discharge efficiency of the secondary battery; and a sodium-ion secondary battery using the negative electrode for a sodium-ion secondary battery.

### [Solution to Problem]

A description will be given of aspects of a negative electrode for a sodium-ion secondary battery and a sodium-ion secondary battery, each of which can solve the above problem.

A negative electrode for a sodium-ion secondary battery of aspect 1 in the present invention contains: a first negative-electrode active material containing a carbon material; and a second negative-electrode active material containing a sodium-containing alloy.

A negative electrode for a sodium-ion secondary battery of aspect 2 is the negative electrode for a sodium-ion secondary battery according to aspect 1 and preferably includes: a first negative electrode layer containing the first negative-electrode active material; and a second negative electrode layer containing the second negative-electrode active material.

A negative electrode for a sodium-ion secondary battery of aspect 3 is the negative electrode for a sodium-ion secondary battery according to aspect 2, wherein the second negative electrode layer preferably doubles as a current collector.

A negative electrode for a sodium-ion secondary battery of aspect 4 is the negative electrode for a sodium-ion secondary battery according to any one of aspects 1 to 3, wherein the sodium-containing alloy is preferably an alloy containing Na and Sn.

A negative electrode for a sodium-ion secondary battery of aspect 5 is the negative electrode for a sodium-ion secondary battery according to aspect 4, wherein the sodium-containing alloy is preferably NaₓSn (where 0.16 ≤ x ≤ 3.75).

A negative electrode for a sodium-ion secondary battery of aspect 6 is the negative electrode for a sodium-ion secondary battery according to any one of aspects 2 to 5, wherein the second negative electrode layer preferably has a thickness of not less than 0.3 µm and not more than 10 µm.

A negative electrode for a sodium-ion secondary battery of aspect 7 is the negative electrode for a sodium-ion secondary battery according to any one of aspects 1 to 6, wherein the carbon material is preferably hard carbon.

A negative electrode for a sodium-ion secondary battery of aspect 8 is the negative electrode for a sodium-ion secondary battery according to any one of aspects 1 to 7, the negative electrode preferably further containing a solid electrolyte.

A negative electrode for a sodium-ion secondary battery of aspect 9 is the negative electrode for a sodium-ion secondary battery according to aspect 8, wherein the solid electrolyte preferably contains at least one type of material selected from the group consisting of β"-alumina, β-alumina, and NASICON crystals.

A sodium-ion secondary battery of aspect 10 in the present invention includes the negative electrode for a sodium-ion secondary battery according to any one of aspects 1 to 9.

A sodium-ion secondary battery of aspect 11 is the sodium-ion secondary battery according to aspect 10 that may further include a solid electrolyte layer, wherein the negative electrode for a sodium-ion secondary battery is provided on one principal surface of the solid electrolyte layer.

A sodium-ion secondary battery of aspect 12 is the sodium-ion secondary battery according to aspect 10 or 11, wherein the negative electrode for a sodium-ion secondary battery may include: a first negative electrode layer provided on the solid electrolyte layer side and containing the first negative-electrode active material; and a second negative electrode layer provided on a principal surface of the first negative electrode layer located on an opposite side to the solid electrolyte layer and containing the second negative-electrode active material.

### [Advantageous Effects of Invention]

The present invention enables provision of: a negative electrode for a sodium-ion secondary battery that can improve the initial charge-discharge efficiency of the secondary battery; and a sodium-ion secondary battery using the negative electrode for a sodium-ion secondary battery.

### [Brief Description of Drawings]

[Fig. 1]

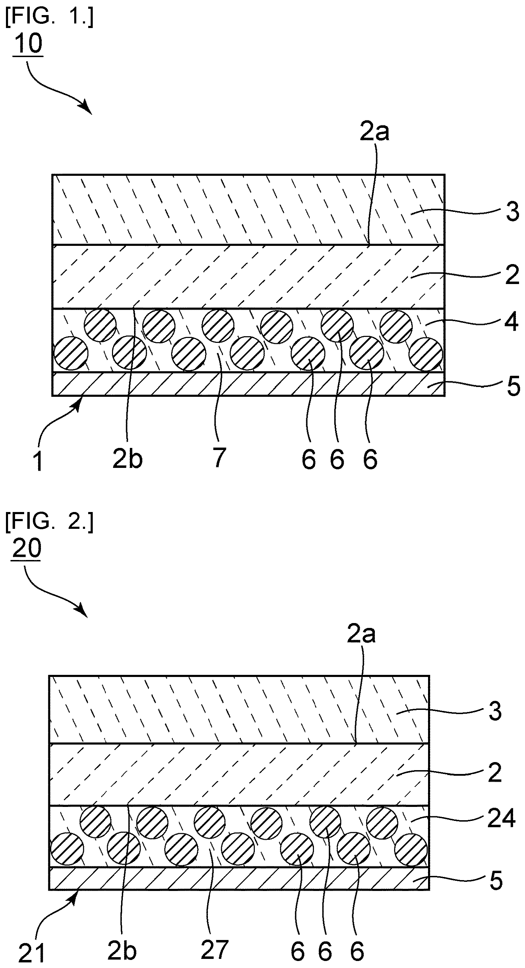

   Fig. 1 is a schematic cross-sectional view showing a negative electrode for a sodium-ion secondary battery and a sodium-ion secondary battery according to a first embodiment of the present invention.
[Fig. 2]
   Fig. 2 is a schematic cross-sectional view showing a negative electrode for a sodium-ion secondary battery and a sodium-ion secondary battery according to a second embodiment of the present invention.
[Fig. 3]

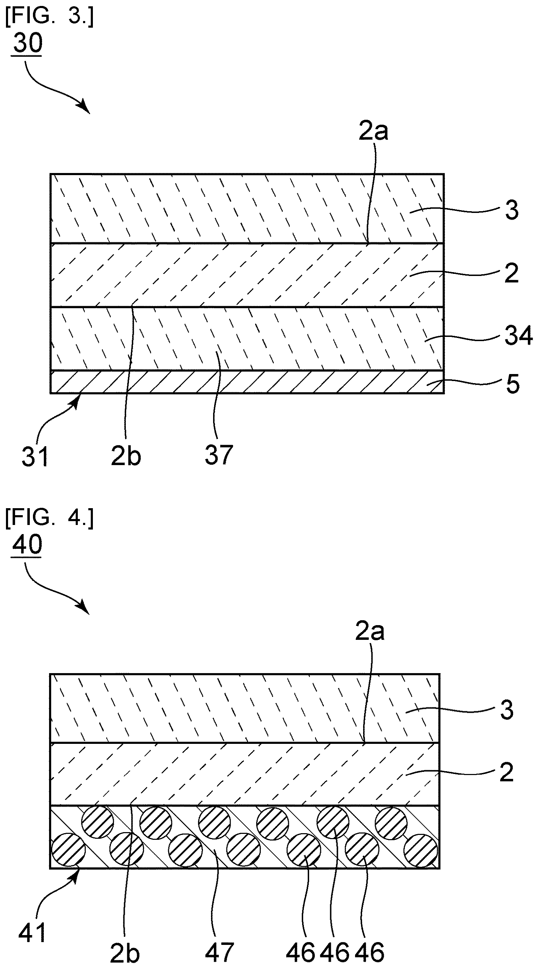

   Fig. 3 is a schematic cross-sectional view showing a negative electrode for a sodium-ion secondary battery and a sodium-ion secondary battery according to a third embodiment of the present invention.
[Fig. 4]
   Fig. 4 is a schematic cross-sectional view showing a negative electrode for a sodium-ion secondary battery and a sodium-ion secondary battery according to a fourth embodiment of the present invention.
[Fig. 5]

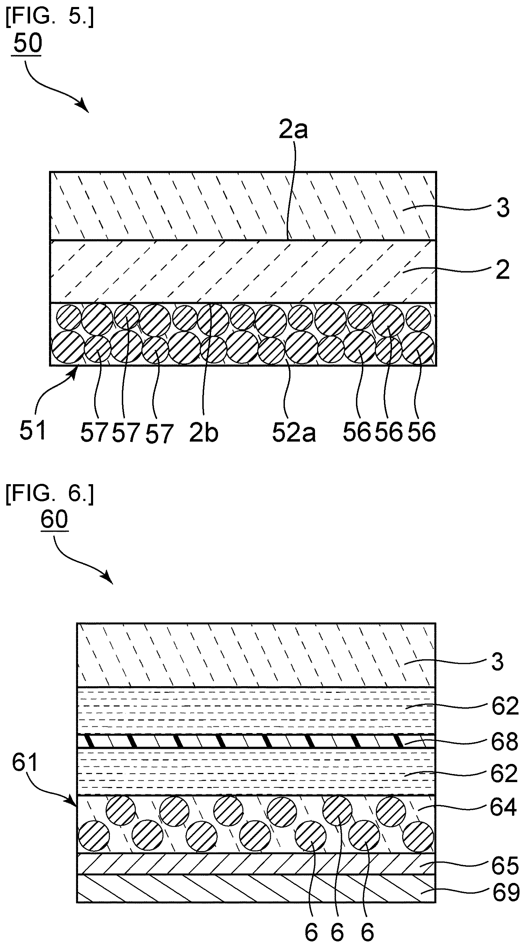

   Fig. 5 is a schematic cross-sectional view showing a negative electrode for a sodium-ion secondary battery and a sodium-ion secondary battery according to a fifth embodiment of the present invention.
[Fig. 6]
   Fig. 6 is a schematic cross-sectional view showing a negative electrode for a sodium-ion secondary battery and a sodium-ion secondary battery according to a sixth embodiment of the present invention.
[Fig. 7]

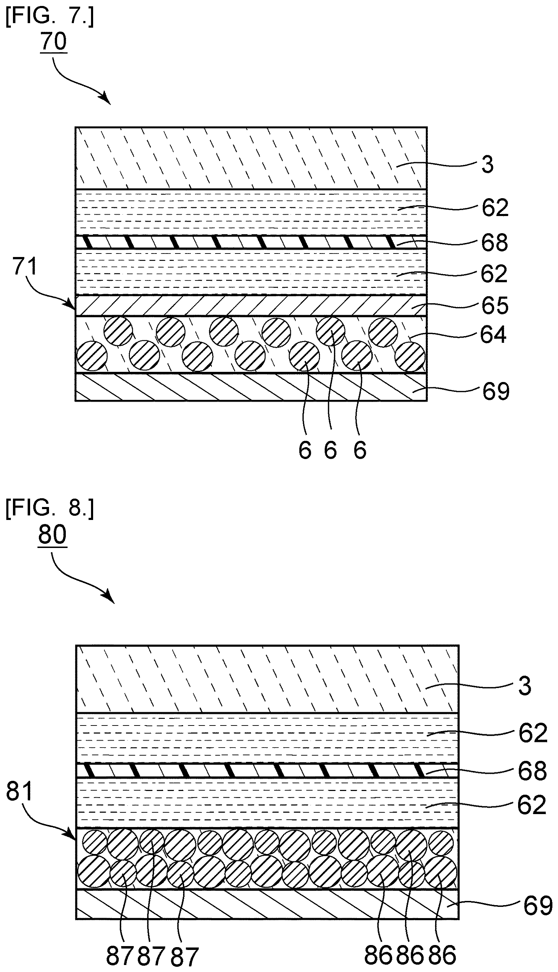

   Fig. 7 is a schematic cross-sectional view showing a negative electrode for a sodium-ion secondary battery and a sodium-ion secondary battery according to a seventh embodiment of the present invention.
[Fig. 8]
   Fig. 8 is a schematic cross-sectional view showing a negative electrode for a sodium-ion secondary battery and a sodium-ion secondary battery according to an eighth embodiment of the present invention.
[Fig. 9]

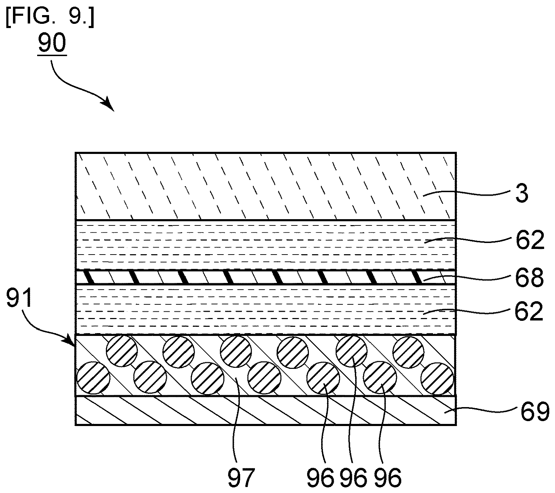

   Fig. 9 is a schematic cross-sectional view showing a negative electrode for a sodium-ion secondary battery and a sodium-ion secondary battery according to a ninth embodiment of the present invention.

### [Description of Embodiments]

Hereinafter, a description will be given of preferred embodiments. However, the following embodiments are merely illustrative and the present invention is not intended to be limited to the following embodiments. Throughout the drawings, members having substantially the same functions may be referred to by the same reference characters.

### [First Embodiment]

Fig. 1 is a schematic cross-sectional view showing a negative electrode for a sodium-ion secondary battery and a sodium-ion secondary battery according to a first embodiment of the present invention.

As shown in Fig. 1, a sodium-ion secondary battery 10 includes a solid electrolyte layer 2, a positive electrode layer 3, and a negative electrode layer 1.

The solid electrolyte layer 2 has a first principal surface 2a and a second principal surface 2b opposed to each other. The positive electrode layer 3 is provided on the first principal surface 2a of the solid electrolyte layer 2. On the other hand, the negative electrode layer 1 is provided on the second principal surface 2b of the solid electrolyte layer 2. The negative electrode layer 1 is a first embodiment of the negative electrode for a sodium-ion secondary battery according to the present invention.

The negative electrode layer 1 includes a first negative electrode layer 4 and a second negative electrode layer 5. The first negative electrode layer 4 is provided on the second principal surface 2b of the solid electrolyte layer 2. The first negative electrode layer 4 contains a first negative-electrode active material containing a carbon material. On the other hand, the second negative electrode layer 5 is provided on a principal surface of the first negative electrode layer 4 located on the side thereof opposite to the solid electrolyte layer 2. The second negative electrode layer 5 contains a second negative-electrode active material containing a sodium-containing alloy.

Since in this embodiment the negative electrode layer 1 as the negative electrode for a sodium-ion secondary battery has the above structure, the initial charge-discharge efficiency of the sodium-ion secondary battery 10 can be improved.

Conventionally, during initial charge of a rocking chair sodium-ion secondary battery, a reaction occurs in which sodium ions serving as carrier ions transfer from the positive electrode layer to the negative electrode layer and the negative-electrode active material absorbs the sodium ions. However, during the initial charge, an undesirable side reaction may also occur and sodium ions may be thus trapped in the negative electrode layer, in which case the sodium ions may not return to the positive electrode layer during discharge. For example, when the negative-electrode active material is constituted by a carbon material, such as hard carbon, there is a problem that, during charge, sodium ions are trapped by functional groups remaining in the carbon material and, during discharge, the sodium ions do not return to the positive electrode layer. In this case, the problem arises that an initial irreversible capacity is produced in the sodium-ion secondary battery and, thus, the initial charge-discharge efficiency, which is the ratio of the initial discharge capacity to the initial charge capacity, decreases.

Unlike the above, in this embodiment, the negative electrode layer 1 contains not only a first negative-electrode active material containing a carbon material, but also a second negative-electrode active material containing a sodium-containing alloy. Therefore, even when sodium ions are trapped in the first negative electrode layer 4 containing the carbon material during initial charge and discharge of the sodium-ion secondary battery 10, sodium ions equivalent in quantity to those not returning to the positive electrode layer 3 can be supplied from the second negative electrode layer 5 containing the sodium-containing alloy to the positive electrode layer 3. Thus, the initial irreversible capacity of the sodium-ion secondary battery 10 can be reduced and, hence, the initial charge-discharge efficiency thereof can be enhanced.

Furthermore, in this embodiment, since the negative electrode layer 1 as the negative electrode for a sodium-ion secondary battery has the above structure, the cycle characteristics of the sodium-ion secondary battery 10 can be increased.

Previously, in the case where, in a sodium-ion secondary battery, the negative-electrode active material is constituted by a carbon material, such as hard carbon, when during charge the battery is overcharged, a voltage drops may occur and, thus, sodium ions may precipitate in the form of dendrites. In this case, the problem arises that repeated charge and discharge in the sodium-ion secondary battery cause the dendrites to be cracked and reduced to a fine powder and thus deteriorate the cycle characteristics.

Unlike the above, in this embodiment, also when the cycle characteristics of the sodium-ion secondary battery 10 is deteriorated by repeated charge and discharge, sodium ions can be supplied from the second negative electrode layer 5 to the positive electrode layer 3. Thus, the capacity of the sodium-ion secondary battery 10 after repeated charge and discharge can be increased. Therefore, the sodium-ion secondary battery 10 according to this embodiment also has excellent cycle characteristics during charge and discharge.

Furthermore, in the sodium-ion secondary battery 10, the second negative electrode layer 5 provided in the outer side of the negative electrode layer 1 contains a sodium-containing alloy and therefore doubles as a current collector layer. Hence, in the sodium-ion secondary battery 10, the number of components can be reduced.

However, the sodium-ion secondary battery 10 may include another current collector layer. The other current collector layer may be provided on a principal surface of the positive electrode layer 3 located on an opposite side to the solid electrolyte layer 2 or may be provided on a principal surface of the negative electrode layer 1 located on an opposite side to the solid electrolyte layer 2. The other current collector layers may be provided on both the principal surface of the positive electrode layer 3 and the negative electrode layer 1 located on an opposite side to the solid electrolyte layer 2.

In the present invention, as in the above sodium-ion secondary battery 10, a sodium-ion secondary battery preferably has a structure A in which a first negative electrode layer 4 containing a carbon material as a negative-electrode active material and a second negative electrode layer 5 containing a sodium-containing alloy as a negative-electrode active material are layered in this order on a solid electrolyte layer 2.

Since the sodium-ion secondary battery has the structure A, sodium ions are supplied from the sodium-containing alloy in the second negative electrode layer 5 to the carbon material as the negative-electrode active material in the first negative electrode layer 4. Therefore, not only the initial irreversible capacity can be reduced (be pre-doped), but also the second negative electrode layer 5 containing the sodium-containing alloy acts as a current collector, which increases the electronic conductivity of the negative electrode layer 1. As a result, the output characteristics of the sodium-ion secondary battery 10 can be further improved.

When, as in the structure A, the second negative electrode layer 5 containing a sodium-containing alloy significantly changing in volume with absorption and release of sodium ions is disposed as the outermost layer having a free surface, the volume change of the sodium-containing alloy can be tolerated. As a result, the cycle characteristics of the sodium-ion secondary battery 10 can be further improved.

Although sodium ions migrating from the positive electrode layer 3 via the solid electrolyte layer 2 during charge are expected to be accommodated in the first negative electrode layer 4 containing a carbon material, but if the first negative electrode layer 4 has become overcharged, a part of the sodium ions having been unable to be accommodated in the first negative electrode layer 4 might precipitate as metallic sodium. However, when, as in the structure A, the sodium-ion secondary battery has the second negative electrode layer 5 containing a sodium-containing alloy as the outermost layer, even if a part of sodium ions has been unable to be accommodated in the first negative electrode layer 4, the second negative electrode layer 5 can absorb the part of sodium ions to prevent it from being crystallized in the form of dendrites, thus more certainly preventing deterioration and internal short-circuiting of the battery.

Even if, after extended cycle, the capacities of both the first negative electrode layer 4 and the second negative electrode layer 5 that accommodate sodium ions decrease (the capacities deteriorate), when, as in the structure A, the sodium-ion secondary battery has as the outermost layer the second negative electrode layer 5 containing a sodium-containing alloy having high wettability on metallic sodium, metallic sodium can be reversibly dissolved and precipitated on the second negative electrode layer 5 and, eventually, sodium ions involved in charge and discharge can be replenished. Therefore, the deterioration in cycle characteristics of the sodium-ion secondary battery 10 can be further reduced.

On the other hand, in the case where a sodium-ion secondary battery has a structure B in which a sodium-containing alloy negative electrode layer containing a sodium-containing alloy as a negative-electrode active material and a carbon material negative electrode layer containing a carbon material as a negative-electrode active material are layered in this order on a solid electrolyte layer, sodium ions are supplied from the sodium-containing alloy to the carbon material as a negative-electrode active material and, thus, the initial irreversible capacity can be reduced (be pre-doped). However, in doing so, the volume of the sodium-containing alloy negative electrode layer shrinks, which may disconnect the ionic conduction path at the interfaces between the layers and, eventually, cause a deterioration in cycle characteristics of the sodium-ion secondary battery.

Furthermore, when, as in the structure B, the outermost layer is a carbon material negative electrode layer, the electronic conductivity is lower than a sodium-containing alloy negative electrode layer and, therefore, the output characteristics of the sodium-ion secondary battery may decrease.

In addition, sodium-containing alloys have high reducing power, are thus easily oxidizable by the atmosphere, moisture, and some organic solvents, and therefore need to be treated in an inert atmosphere. For this reason, a solid electrolyte layer and a carbon material negative electrode layer need to be formed in an inert atmosphere, which increases the production cost.

Particularly, in the structure B, in forming the carbon material negative electrode layer or the solid electrolyte layer on the sodium-containing alloy negative electrode layer by heat treatment, the sodium-containing alloy is likely to be oxidized to deactivate itself or produce a side reaction, which makes it likely that the effect of reducing the initial irreversible capacity of the sodium-ion secondary battery becomes low (the effect is likely to become low in both the case where the carbon material negative electrode layer is formed by sintering after the sodium-containing alloy negative electrode layer is formed on the solid electrolyte layer and the case where the solid electrolyte layer is formed by sintering after the sodium-containing alloy negative electrode layer is formed on the carbon material negative electrode layer).

Unlike the above, in the case of forming the structure A in which the first negative electrode layer 4 containing a carbon material as a negative-electrode active material and the second negative electrode layer 5 containing a sodium-containing alloy as a negative-electrode active material are layered in this order on the solid electrolyte layer 2, sodium ions migrate from the second negative electrode layer 5 containing a sodium-containing alloy to the first negative electrode layer 4 while and immediately after the second negative electrode layer 5 is formed in a vacuum process, and the second negative electrode layer 5 containing a sodium-containing alloy is thus lowered in reducing power and less likely to suffer the effects from oxidization.

Hereinafter, a detailed description will be given of each of the layers constituting the sodium-ion secondary battery according to the present invention.

### (Negative Electrode Layer)

The negative electrode layer 1 includes a first negative electrode layer 4 and a second negative electrode layer 5. The first negative electrode layer 4 contains a first negative-electrode active material 6 and a solid electrolyte 7.

### First Negative Electrode Layer;

The first negative electrode layer 4 contains a first negative-electrode active material 6. The first negative-electrode active material 6 contains a carbon material. Cabon materials that can be used include hard carbon, soft carbon, and graphite. Among them, hard carbon is preferred as the carbon material. The first negative-electrode active material 6 may be made only of a carbon material or may contain a carbon material and another or other components. Examples of the other components include Sn, Bi, Sb, Pb, Si, and alloys containing any of them. However, the content of the other components is preferably not more than 10% by mass of the total amount of the first negative-electrode active material 6.

The first negative electrode layer 4 may further contain a conductive agent. The ratio among the component materials in the first negative electrode layer 4 may be, for example, in terms of % by mass, 50% to 95% for the first negative-electrode active material 6, 5% to 50% for the solid electrolyte 7, and 0% to 20% for the conductive agent.

The content of the first negative-electrode active material 6 in the first negative electrode layer 4 is, in terms of % by mass, preferably not less than 50%, more preferably not less than 60%, even more preferably not less than 70%, preferably not more than 95%, more preferably not more than 90%, and even more preferably not more than 85%. When the content of the first negative-electrode active material 6 in the first negative electrode layer 4 is within the above range, the battery characteristics, such as charge and discharge capacities, of the sodium-ion secondary battery 10 can be more effectively improved.

The content of the solid electrolyte 7 in the first negative electrode layer 4 is, in terms of % by mass, preferably not less than 5%, more preferably not less than 10%, even more preferably not less than 15%, preferably not more than 50%, more preferably not more than 30%, and even more preferably not more than 25%. When the content of the solid electrolyte 7 in the first negative electrode layer 4 is within the above range, the ionic conductivity can be further improved and the battery characteristics of the sodium-ion secondary battery 10 can be more effectively improved.

The content of the conductive agent in the first negative electrode layer 4 is, in terms of % by mass, preferably not less than 0%, more preferably not less than 0.1%, even more preferably not less than 0.5%, preferably not more than 20%, more preferably not more than 10%, and even more preferably not more than 8%. When the content of the conductive agent in the first negative electrode layer 4 is within the above range, the electronic conductivity can be further improved and the battery characteristics of the sodium-ion secondary battery 10 can be more effectively improved.

An example of the solid electrolyte 7 that can be used is a sodium-ion conductive oxide. Examples of the sodium-ion conductive oxide include compounds containing: at least one selected from among Al, Y, Zr, Si, and P; Na; and O. Specific examples of the sodium-ion conductive oxide include beta-alumina and NASICON crystals both of which have an excellent sodium-ion conductivity. Among them, the preferred sodium-ion conductive oxide is at least one type of sodium-ion conductive oxide selected from the group consisting of β"-alumina, β-alumina, and NASICON crystals. The more preferred sodium-ion conductive oxide is β-alumina or β"-alumina. These materials have more excellent sodium-ion conductivity.

Beta-alumina includes two types of crystals: β-alumina (theoretical composition formula: Na₂O·11Al₂O₃) and β"-alumina (theoretical composition formula: Na₂O·5.3Al₂O₃). β"-alumina is a metastable material and is therefore generally used in a state in which Li₂O or MgO is added as a stabilizing agent thereto. β"-alumina has a higher sodium-ion conductivity than β-alumina. Therefore, β"-alumina alone or a mixture of β"-alumina and β-alumina is preferably used and Li₂O-stabilized β"-alumina (Na_{1.7}Li_{0.3}Al_{10.7}O₁₇) or MgO-stabilized β"-alumina ((Al_{10.32}Mg_{0.68}O₁₆)(Na_{1.68}O)) is more preferably used.

Specific examples of the type of NASICON crystals include Na₃Zr₂Si₂PO₁₂, Na_{3.2}Zr_{1.3}Si_{2.2}P_{0.8}O_{10.5}, Na₃Zr_{1.6}Ti_{0.4}Si₂PO₁₂, Na₃Hf₂Si₂PO₁₂, Na_{3.4}Zr_{0.9}Hf_{1.4}Al_{0.6}Si_{1.2}P_{1.9}O₁₂, Na₃Zr_{1.7}Nb_{0.24}Si₂PO₁₂, Na_{3.6}Ti_{0.2}Y_{0.8}Si_{2.8}O₉, Na₃Zr_{1.88}Y_{0.12}Si₂PO₁₂, Na_{3.12}Zr_{1.88}Y_{0.12}S₁₂PO₁₂, Na_{3.05}Zr₂Si_{2.06}P_{0.95}O₁₂, Na_{3.4}Zr₂Si_{2.4}P_{0.6}O₁₂, Na_{3.4}Zr_{1.9}Mg_{0.1}Si_{2.4}P_{0.6}O₁₂, Na_{3.4}Zr_{1.9}Zn_{0.1}Si_{2.4}P_{0.6}O₁₂, Na_{3.4}Zr_{1.9}Mg_{0.1}Si_{2.2}P_{0.8}O₁₂, Na_{3.4}Zr_{1.9}Zn_{0.1}Si_{2.2}P_{0.8}O₁₂, Na_{3.6}Zr_{0.13}Yb_{1.67}Si_{0.11}P_{2.9}O₁₂, and Na₅YSi₄O₁₂. The preferred type of NASICON crystals is Na_{3.4}Zr₂Si_{2.4}P_{0.6}O₁₂, Na₃Zr_{1.7}Nb_{0.24}Si₂PO₁₂ or Na_{3.05}Zr₂Si_{2.06}P_{0.95}O₁₂, because they have excellent sodium-ion conductivity.

The average particle diameter of powder of the solid electrolyte 7 is preferably not less than 0.05 µm and not more than 3 µm, more preferably not less than 0.05 µm and less than 1.8 µm, even more preferably not less than 0.05 µm and not more than 1.5 µm, particularly preferably not less than 0.1 µm and not more than 1.2 µm, and most preferably not less than 0.1 µm and not more than 0.7 µm.

In the present invention, the average particle diameter means D50 (a volume-based average particle diameter) and refers to a value measured by the laser diffraction/scattering method.

An example of the conductive agent that can be used is a conductive carbon. Examples of the conductive carbon include acetylene black, carbon black, Ketjen black, vapor-grown carbon fiber carbon conductive agent (VGCF), and carbon nanotubes. The conductive agent is preferably a carbon-based conductive agent made of any of materials as just described.

The thickness of the first negative electrode layer 4 is preferably not less than 5 µm, more preferably not less than 20 µm, preferably not more than 200 µm, and more preferably not more than 100 µm. In this case, the charge and discharge capacities of the sodium-ion secondary battery 10 can be further increased.

The amount of first negative-electrode active material 6 supported in the first negative electrode layer 4 is preferably not less than 0.15 mg/cm², more preferably not less than 1 mg/cm², preferably not more than 10 mg/cm², and more preferably not more than 5 mg/cm². In this case, the charge and discharge capacities of the sodium-ion secondary battery 10 can be further increased.

### Second Negative Electrode Layer;

The second negative electrode layer 5 contains a second negative-electrode active material. The second negative-electrode active material contains a sodium-containing alloy. In this embodiment, the second negative electrode layer 5 is constituted by a film of a sodium-containing alloy serving as a second negative-electrode active material. The second negative electrode layer 5 may be made only of a sodium-containing alloy or may contain a sodium-containing alloy and another or other components. Examples of the other components include Al, Cu, and SUS. However, the content of the other components is preferably not more than 5% by mass of the total amount of the second negative electrode layer 5.

The type of the sodium-containing alloy is not particularly limited and examples include alloys containing Na and at least one metal selected from among Sn, Sb, Si, Pb, Bi, Fe, Mo, Co, Zn, Ni, Mg, and Au. Among them, an alloy containing Na and Sn is preferred as the sodium-containing alloy. In this case, the melting point of the sodium-containing alloy can be further improved and the battery characteristics, such as charge and discharge capacities, of the sodium-ion secondary battery 10 can be further increased. By further increasing the melting point of the sodium-containing alloy, the thermal resistance of the second negative electrode layer 5 can be further increased and, thus, the safety of the sodium-ion secondary battery 10 can be further improved.

In the case where the sodium-containing alloy is an alloy containing Na and Sn, the sodium-containing alloy is preferably NaₓSn (where 0.16 ≤ x ≤ 3.75).

The subscript x in NaₓSn is preferably not less than 0.2, more preferably not less than 0.3, even more preferably not less than 0.4, preferably not more than 3.5, more preferably not more than 2.5, and even more preferably not more than 1.2. When x in NaₓSn is not less than the above lower limit, the initial irreversible capacity of the sodium-ion secondary battery 10 can be further reduced and, hence, the initial charge-discharge efficiency thereof can be further increased. When x in NaₓSn is not more than the above upper limit, the melting point of the sodium-containing alloy can be further increased.

The thickness of the second negative electrode layer 5 is preferably not less than 0.3 µm, more preferably not less than 1 µm, preferably not more than 10 µm, and more preferably not more than 8 µm. When the thickness of the second negative electrode layer 5 is not less than the above lower limit, the initial irreversible capacity of the sodium-ion secondary battery 10 can be further reduced and, hence, the initial charge-discharge efficiency thereof can be further increased. When the thickness of the second negative electrode layer 5 is not more than the above upper limit, the volume change of the second negative-electrode active material due to absorption and release of sodium ions can be further reduced and the cycle characteristics of the sodium-ion secondary battery 10 during charge and discharge can be further improved.

The amount of second negative-electrode active material supported in the second negative electrode layer 5 is preferably not less than 0.1 mg/cm², more preferably not less than 0.5 mg/cm², preferably not more than 3.6 mg/cm², and more preferably not more than 1.5 mg/cm². When the amount of second negative-electrode active material supported in the second negative electrode layer 5 is not less than the above lower limit, the initial irreversible capacity of the sodium-ion secondary battery 10 can be further reduced and, hence, the initial charge-discharge efficiency thereof can be further increased. When the amount of second negative-electrode active material supported in the second negative electrode layer 5 is not more than the above upper limit, the volume change of the second negative-electrode active material due to absorption and release of sodium ions can be further reduced and the cycle characteristics of the sodium-ion secondary battery 10 during charge and discharge can be further improved.

The ratio of the amount of second negative-electrode active material supported in the second negative electrode layer 5 to the amount of first negative-electrode active material supported in the first negative electrode layer 4 (second negative electrode layer 5 to first negative electrode layer 4) is preferably not less than 0.9, more preferably not less than 5, even more preferably not less than 6, preferably not more than 25, more preferably not more than 15, and even more preferably not more than 10. The ratio between the supported amounts (second negative electrode layer 5 to first negative electrode layer 4) is not less than the above lower limit, the initial irreversible capacity of the sodium-ion secondary battery 10 can be further reduced and, hence, the initial charge-discharge efficiency thereof can be further increased. The ratio between the supported amounts (second negative electrode layer 5 to first negative electrode layer 4) is not more than the above upper limit, the volume change of the second negative-electrode active material due to absorption and release of sodium ions can be further reduced and the cycle characteristics of the sodium-ion secondary battery 10 during charge and discharge can be further improved.

### (Production Method of Negative Electrode Layer)

### Formation of First Negative Electrode Layer;

First, a solid electrolyte precursor is prepared. In this stage, it is preferred to prepare a solution of solid electrolyte precursor. Specific examples of the solid electrolyte precursor and its solution will be described later.

Next, the solution of solid electrolyte precursor is dried. Thus, a solid electrolyte precursor is obtained. Next, the solid electrolyte precursor is ground into powder form and mixed with a conductive agent as needed, thus forming a mixed powder. Next, the solid electrolyte precursor powder or the above mixed powder is mixed with a carbon material powder as a source material for a first negative-electrode active material 6, thus obtaining a negative electrode composite material powder. Next, the negative electrode composite material powder is mixed, in an organic solvent, with a binder as needed. An example of the organic solvent that can be used is N-methyl-2-pyrrolidone. Thus, a paste is obtained.

The average particle diameter of the carbon material powder as a source material for a first negative-electrode active material 6 is not particularly limited and is preferably not less than 0.1 µm and not more than 10 µm, more preferably not less than 0.2 µm and not more than 7 µm, even more preferably not less than 0.3 µm and not more than 5 µm, and particularly preferably not less than 0.5 µm and not more than 1.5 µm.

Next, the paste is applied to a second principal surface 2b of a solid electrolyte layer 2 to be described hereinafter and then dried. In this manner, a lamination step of layering the solid electrolyte layer 2 and the negative electrode material layer to form a laminate is performed. Next, the laminate of the solid electrolyte layer 2 and the paste as the negative electrode material layer is fired. Thus, a first negative electrode layer 4 can be formed on the second principal surface 2b of the solid electrolyte layer 2.

The temperature for drying the paste is not particularly limited, but may be, for example, not lower than 30°C and not higher than 350°C. The time for drying the paste is not particularly limited, but may be, for example, not less than 5 minutes and not more than 600 minutes.

The firing temperature (the maximum temperature) during the firing is preferably not lower than 600°C, more preferably not lower than 700°C, preferably not higher than 1200°C, and more preferably not higher than 1000°C. The holding time at the above firing temperature may be, for example, thirty minutes to three hours.

The firing may be performed, for example, in an inert atmosphere. For example, the firing may be performed in an atmosphere of N₂, Ar, Ne or He or in a vacuum. Alternatively, the firing may be performed in a reductive atmosphere containing H₂. When the firing is performed in an inert atmosphere or a reductive atmosphere, the initial charge-discharge efficiency can be further improved, which is favorable. Unless the negative electrode material layer is oxidized or oxidatively decomposed during the firing, the atmosphere may contain a small amount of oxygen. The oxygen concentration may be, for example, not less than 0.1 ppm and not more than 1000 ppm, but is not limited to this.

### Solid Electrolyte Precursor and Solution Thereof;

When the solid electrolyte is beta-alumina, a solid electrolyte precursor can be obtained, for example, by mixing aluminum nitrate, sodium nitrate, lithium nitrate, and so on. In doing so, the ratio among the above materials is adjusted to give a desired composition ratio of the solid electrolyte.

When the solid electrolyte is NASICON crystals or Na₅XSi₄O₁₂ crystals (where X represents at least one selected from among group III transition metal elements and preferably rare earth elements), an example of the solution of solid electrolyte precursor is a solution containing a sodium element and a transition metal element both constituting a solid electrolyte and carbonate ions. In the solution, the sodium element is contained in the form of sodium ions and the transition metal element is contained in the form of transition metal ions. The solid electrolyte precursor is made of, for example, a gelled product or a dried product from the solution of solid electrolyte precursor. Furthermore, the solid electrolyte is made of a fired product from the solid electrolyte precursor.

For example, a solution of solid electrolyte precursor that contains nitrate ions instead of carbonate ions may be used. The type of ions that can be contained in the solution is not particularly limited.

In the solution of solid electrolyte precursor, carbonate ions are preferably coordinated bidentately to the transition metal element. In this case, the transition metal element is likely to be stably present in the solution.

The solution of solid electrolyte precursor preferably contains NR⁴⁺ (where Rs are each independently a substituent of at least one selected from the group consisting of H, CH₃, C₂H₅, and CH₂CH₂OH) as counterions to the sodium ions. By doing so, the transition metal element is likely to be stably present in the solution.

The solution of solid electrolyte precursor can be obtained, for example, by mixing liquid glass (sodium silicate), sodium tripolyphosphate, and a zirconium ammonium carbonate aqueous solution.

### Binder;

The binder is a material for binding the raw materials (raw material powders) together. Examples of the binder include: cellulose derivatives, such as carboxymethyl cellulose, hydroxypropylmethyl cellulose, hydroxypropyl cellulose, ethyl cellulose, hydroxyethyl cellulose, and hydroxymethyl cellulose, or water-soluble polymers, such as polyvinyl alcohol; thermosetting resins, such as thermosetting polyimide, phenolic resin, epoxy resin, urea resin, melamine resin, unsaturated polyester resin, and polyurethane; polycarbonate-based resins, such as polypropylene carbonate; polyvinylidene fluoride, acrylic resins, such as polyacrylic acid; polyvinyl acetal; and polyvinyl butyral.

### Formation of Second Negative Electrode Layer;

Next, a second negative electrode layer 5 is formed on a principal surface of the first negative electrode layer 4 located on an opposite side to the solid electrolyte layer **2.** An example of the method for forming a second negative electrode layer 5 is the method of forming a film of a sodium-containing alloy by a vapor-phase synthesis method. The vacuum vapor deposition method is preferably used as the vapor-phase synthesis method. For example, a source material for a film of a sodium-containing alloy is put into a tungsten basket or the like and a surface of the first negative electrode layer 4 on which a deposited film is to be formed is placed just above the tungsten basket to face the source material. Next, in a vacuum, heat is applied to the source material for a film of a sodium-containing alloy to evaporate it. The evaporated sodium-containing alloy is deposited on the surface of the first negative electrode layer 4 and, thus, a film thereof can be formed on the surface of the first negative electrode layer **4.** The second negative electrode layer 5 may be formed by, for example, a physical vapor deposition method, such as vacuum vapor deposition or sputtering, or a chemical vapor deposition method, such as thermal CVD, MOCVD or plasma CVD, and the method for forming it is not particularly limited. When the second negative electrode layer 5 is formed by vapor phase synthesis, the second negative electrode layer 5 can firmly adhere to the first negative electrode layer 4 and, thus, an excellent battery performance can be exhibited. Particularly, the output performance and cycle characteristics can be improved. In addition, since the film formation technique as described above uses a vacuum process, the reaction of the sodium-containing alloy with atmospheric components during film formation can be reduced. Thus, the initial charge-discharge efficiency can be particularly increased, which is favorable.

### (Solid Electrolyte Layer)

The solid electrolyte constituting the solid electrolyte layer 2 is preferably made of a sodium-ion conductive oxide. Examples of the sodium-ion conductive oxide that can be used include those described in the above section for the negative electrode layer.

The solid electrolyte layer 2 can be produced by mixing raw material powders, forming the mixed raw material powder into a shape, and then firing it. For example, the solid electrolyte layer 2 can be produced by making the raw material powders into a slurry, forming the slurry into a green sheet, and then firing the green sheet. Alternatively, the solid electrolyte layer 2 may be produced by the sol-gel method.

The thickness of the solid electrolyte layer 2 is preferably within a range of 5 µm to 1000 µm and more preferably within a range of 10 µm to 200 µm. If the thickness of the solid electrolyte layer 2 is too small, its mechanical strength decreases to make it susceptible to brakeage and, therefore, the battery is likely to cause an internal short-circuit. If the thickness of the solid electrolyte layer 2 is too large, the distance of sodium ion conduction of the battery accompanying charge and discharge becomes long, the internal resistance thereof therefore becomes high, and, thus, the discharge capacity and the operating voltage are likely to decrease. In addition, the energy density per unit volume of the sodium-ion secondary battery 10 is likely to decrease.

### (Positive Electrode Layer)

The type of the positive-electrode active material contained in the positive electrode layer 3 is not particularly limited, but is preferably a positive-electrode active material made of a crystallized glass containing crystals represented by a general formula NaₓM_{y}P₂O_{z} (where 1 ≤ x ≤ 2.8, 0.95 ≤ y ≤ 1.6, 6.5 ≤ z ≤ 8, and M is at least one selected from the group consisting of Fe, Ni, Co, Mn, and Cr). Particularly, the more preferred positive-electrode active material is one made of a crystallized glass containing crystals represented by a general formula NaₓMP₂O₇ (where 1 ≤ x ≤ 2 and M is at least one selected from the group consisting of Fe, Ni, Co, Mn, and Cr). Examples that can be used as positive-electrode active material crystals as just described include Na₂FeP₂O₇, Na₂CoP₂O₇, and Na₂NiP₂O₇.

A crystallized glass means a glass obtained by heating (firing) a precursor glass containing an amorphous phase to precipitate crystals (crystallize the precursor glass). The entire amorphous phase may transition into a crystal phase or the amorphous phase may partially remain. Furthermore, a single type of crystals may be precipitated or two or more types of crystals may be precipitated. For example, whether or not to be a crystallized glass can be determined by the peak angles shown by powder X-ray diffraction (XRD).

The positive electrode layer 3 may further contain a solid electrolyte and/or a conductive agent. The ratio among the component materials in the positive electrode layer 3 may be, for example, in terms of % by mass, 60% to 99.9% for the positive-electrode active material, 0% to 30% for the solid electrolyte, and 0.1% to 10% for the conductive agent.

Examples of the solid electrolyte and the conductive agent that can be used include those described in the above section for the negative electrode layer.

The positive electrode layer 3 can be formed, for example, by forming an electrode material layer containing a positive-electrode active material precursor and, as needed, a solid electrolyte powder and a conductive agent on one principal surface of the solid electrolyte layer 2 and firing the electrode material layer. The electrode material layer can be obtained, for example, by applying a paste containing the positive-electrode active material precursor and, as needed, the solid electrolyte powder and the conductive agent and drying the paste. The paste may contain, as necessary, a binder, a plasticizer, a solvent or so on. Alternatively, the electrode material layer may be formed of a powder compact.

The temperature for drying the paste is not particularly limited, but may be, for example, not lower than 30°C and not higher than 150°C. The time for drying the paste is not particularly limited, but may be, for example, not less than 5 minutes and not more than 600 minutes.

The atmosphere during the firing is preferably a reductive atmosphere. The firing temperature (the maximum temperature) may be, for example, 400°C to 600°C and the holding time at the temperature may be, for example, five minutes to less than three hours.

### Positive-Electrode Active Material Precursor;

The positive-electrode active material precursor (positive-electrode active material precursor powder) is preferably made of an amorphous oxide material that generates active material crystals when subjected to firing. In the case where the positive-electrode active material precursor powder is made of an amorphous oxide material, when subjected to firing, the amorphous oxide material not only generates active material crystals, but also softens and flows to enable formation of a dense positive electrode layer 3. In addition, when the positive electrode layer 3 contains a solid electrolyte, the positive-electrode active material and the solid electrolyte can be integrated together. Alternatively, in the case where the positive electrode layer 3 adjoins the solid electrolyte layer 2, both the layers can be bonded together. As a result, an ion conduction path can be formed better, which is favorable. In the present invention, the term "amorphous oxide material" is not limited to a fully amorphous oxide material and includes those partially containing crystals (for example, those having a crystallinity of 10% or less).

The positive-electrode active material precursor powder preferably contains, in terms of % by mole of the following oxides, 25% to 55% Na₂O, 10% to 30% Fe₂O₃+Cr₂O₃+MnO+CoO+NiO, and 25% to 55% P₂O₅. The reasons why the composition is limited as just described will be described below. In the following description of the respective contents of the components, "%" refers to "% by mole" unless otherwise stated.

Na₂O is a main component of the active material crystals represented by the general formula NaₓM_{y}P₂O_{z} (where M represents at least one transition metal element selected from among Cr, Fe, Mn, Co and Ni, 1 ≤ x ≤ 2.8, 0.95 ≤ y ≤ 1.6, and 6.5 ≤ z ≤ 8). The content of Na₂O is preferably 25% to 55% and more preferably 30% to 50%. When the content of Na₂O is within the above range, the charge and discharge capacities of the secondary battery 10 can be further increased.

Fe₂O₃, Cr₂O₃, MnO, CoO, and NiO are also main components of the active material crystals represented by the general formula NaₓM_{y}P₂O_{z}. The content of Fe₂O₃+Cr₂O₃+MnO+CoO+NiO is preferably 10% to 30% and more preferably 15% to 25%. When the content of Fe₂O₃+Cr₂O₃+MnO+CoO+NiO is not less than the above lower limit, the charge and discharge capacities of the sodium-ion secondary battery 10 can be further increased. On the other hand, when the content of Fe₂O₃+Cr₂O₃+MnO+CoO+NiO is not more than the above upper limit, this can make it less likely that undesirable crystals, such as Fe₂O₃, Cr₂O₃, MnO, CoO or NiO, precipitate. In order to further increase the cycle characteristics of the sodium-ion secondary battery 10, Fe₂O₃ is preferably positively contained in the positive-electrode active material precursor powder. The content of Fe₂O₃ is preferably 1% to 30%, more preferably 5% to 30%, even more preferably 10% to 30%, and particularly preferably 15% to 25%. The content of each component of Cr₂O₃, MnO, CoO, and NiO is preferably 0% to 30%, more preferably 10% to 30%, and even more preferably 15% to 25%. In containing at least two components selected from among Fe₂O₃, Cr₂O₃, MnO, CoO, and NiO in the positive-electrode active material precursor powder, the total content of them is preferably 10% to 30% and more preferably 15% to 25%.

P₂O₅ is also a main component of the active material crystals represented by the general formula NaₓM_{y}P₂O_{z}. The content of P₂O₅ is preferably 25% to 55% and more preferably 30% to 50%. When the content of P₂O₅ is within the above range, the charge and discharge capacities of the sodium-ion secondary battery 10 can be further increased.

The positive-electrode active material precursor powder may contain, in addition to the above components, V₂O₅, Nb₂O₅, MgO, Al₂O₃, TiO₂, ZrO₂ or Sc₂O₃. These components have the effect of increasing the conductivity (electronic conductivity), which facilitates the improvement of the rapid charge and discharge characteristics of the sodium-ion secondary battery 10. The total content of these components is preferably 0% to 25% and more preferably 0.2% to 10%. When the content of these components is not more than the above upper limit, heterogeneous crystals not contributing to the battery characteristics are less likely to be generated and, therefore, the charge and discharge capacities of the sodium-ion secondary battery 10 can be further increased.

Aside from the above components, the positive-electrode active material precursor powder may contain SiO₂, B₂O₃, GeO₂, Ga₂O₃, Sb₂O₃ or Bi₂O₃. When containing any of these components, a positive-electrode active material precursor powder having a further increased glass formation ability and being more homogeneous can be easily obtained. The total content of these components is preferably 0% to 25% and more preferably 0.2% to 10%. Because these components do not contribute to the battery characteristics, an excessively large content of them leads to a tendency to decrease the charge and discharge capacities of the sodium-ion secondary battery 10.

The positive-electrode active material precursor powder is preferably made by melting a raw material batch and forming the melt into a shape. This making method is preferred because an amorphous positive-electrode active material precursor powder having excellent homogeneity can be easily obtained. Specifically, the positive-electrode active material precursor powder can be made in the following manner.

First, raw materials are formulated to give a desired composition, thus obtaining a raw material batch. Next, the obtained raw material batch is melted. The melting temperature should preferably be appropriately adjusted so that the raw material batch can be homogeneously melted. For example, the melting temperature is preferably not less than 800°C and more preferably not less than 900°C. The upper limit of the melting temperature is not particularly limited, but an excessively high melting temperature leads to energy loss or evaporation of the sodium component and so on. Therefore, the melting temperature is preferably not more than 1500°C and more preferably not more than 1400°C.

Next, the obtained melt is formed into a shape. The method for forming the melt into a shape is not particularly limited. For example, the melt may be formed into a film with rapid cooling by pouring the melt between a pair of cooling rolls or formed into an ingot by casting the melt into a mold.

Subsequently, the obtained formed body is ground to obtain a positive-electrode active material precursor powder. The average particle diameter of the positive-electrode active material precursor powder is preferably not less than 0.01 µm and less than 0.7 µm, more preferably not less than 0.03 µm and not more than 0.6 µm, even more preferably not less than 0.05 µm and not more than 0.6 µm, and particularly preferably not less than 0.1 µm and not more than 0.5 µm.

### Binder;

Materials that can be used as the binder include those described in the section for the first negative electrode layer 4.

The thickness of the positive electrode layer 3 is preferably not less than 10 µm, more preferably not less than 30 µm, even more preferably not less than 50 µm, particularly preferably not less than 70 µm, and most preferably not less than 100 µm. In this case, the charge and discharge capacities of the sodium-ion secondary battery 10 can be further increased. On the other hand, if the thickness of the positive electrode layer 3 is too large, not only the resistance against electronic conduction becomes large, which may decrease the discharge capacity and operating voltage of the sodium-ion secondary battery 10, but also the stress due to shrinkage during firing becomes large, which may lead to peeling of the positive electrode layer 3. Therefore, the thickness of the positive electrode layer 3 is preferably not more than 1000 µm.

The amount of positive-electrode active material supported in the positive electrode layer 3 is preferably not less than 1 mg/cm², more preferably not less than 3 mg/cm², even more preferably not less than 5 mg/cm², particularly preferably not less than 7 mg/cm², and most preferably not less than 10 mg/cm². In this case, the capacity of the sodium-ion secondary battery 10 can be further increased. The upper limit of the amount of positive-electrode active material supported in the positive electrode layer 3 is not particularly limited, but may be, for example, 30 mg/cm².

### (Other Current Collector Layers)

The materials for the other current collector layers are not particularly limited, but metallic materials, such as aluminum, titanium, silver, copper, stainless steel or an alloy of any of them, can be used for each of the current collector layers. These metallic materials may be used singly or in combination of two or more of them. The alloy of any of them means an alloy containing at least one of the above metals. The thickness of each of the other current collector layers is not particularly limited, but may be not less than 0.01 µm and not more than 1000 µm.

The method for forming the other current collector layers is not particularly limited and examples include physical vapor deposition methods, such as vapor deposition and sputtering, and chemical vapor deposition methods, such as thermal CVD, MOCVD, and plasma CVD. Examples of the other method for forming the other current collector layers include liquid-phase deposition methods, such as plating, sol-gel method, and spin coating. However, the other current collector layers are preferably formed on the positive electrode layer 3 and the negative electrode layer 1, respectively, by sputtering, the reason for which is that sputtering provides excellent adhesion.

### [Second to Fifth Embodiments]

### (Second Embodiment)

Fig. 2 is a schematic cross-sectional view showing a negative electrode for a sodium-ion secondary battery and a sodium-ion secondary battery according to a second embodiment of the present invention.

As shown in Fig. 2, in a negative electrode layer 21 (a negative electrode for a sodium-ion secondary battery) of a sodium-ion secondary battery 20, a first negative electrode layer 24 contains a first negative-electrode active material 6 and a mixture phase 27. Examples that can be used as the first negative-electrode active material 6 include those described in the first embodiment. The mixture phase 27 is constituted by a mixture of hard carbon and a solid electrolyte.

The content of the first negative-electrode active material 6 in the first negative electrode layer 24 is, in terms of % by mass, preferably not less than 20%, more preferably not less than 30%, even more preferably not less than 37%, preferably not more than 85%, more preferably not more than 70%, and even more preferably not more than 60%. When the content of the first negative-electrode active material 6 in the first negative electrode layer 24 is within the above range, the battery characteristics, such as charge and discharge capacities, of the sodium-ion secondary battery 20 can be more effectively improved.

The content of the mixture phase 27 in the first negative electrode layer 24 is, in terms of % by mass, preferably not less than 15%, more preferably not less than 30%, even more preferably not less than 40%, preferably not more than 90%, more preferably not more than 70%, and even more preferably not more than 60%. When the content of the mixture phase 27 in the first negative electrode layer 24 is within the above range, the ionic conductivity and electrical conductivity can be further improved and the battery characteristics of the sodium-ion secondary battery 20 can be more effectively improved.

The content of hard carbon contained in the mixture phase 27 is not particularly limited, but is preferably not less than 60% by mass, more preferably not less than 70% by mass, preferably not more than 90% by mass, and more preferably not more than 80% by mass. In this case, the electrical conductivity of the first negative electrode layer 24 can be further increased and, thus, the charge and discharge capacities of the sodium-ion secondary battery 20 can be further increased.

The content of solid electrolyte contained in the mixture phase 27 is not particularly limited, but is preferably not less than 10% by mass, more preferably not less than 20% by mass, preferably not more than 40% by mass, and more preferably not more than 30% by mass. In this case, the ionic conductivity of the first negative electrode layer 24 can be further increased.

The first negative electrode layer 24 can be formed, for example, by the following method.

First, a paste containing a carbon material precursor and a solid electrolyte is made. In making the paste, first, a solid electrolyte precursor is prepared. In this stage, it is preferred to prepare a solution of solid electrolyte precursor. Specific examples of the solid electrolyte precursor and its solution will be described later. Furthermore, a carbon material precursor (a precursor of a carbon material made of hard carbon) is prepared. Examples of the carbon material precursor that can be used include appropriate sugars, biomass, and polymers.

In using a sugar as the carbon material precursor, examples include sucrose, cellulose, D-glucose, and sucrose. In using biomass as the carbon material precursor, examples include cornstalks, sorghum stalks, pine cones, mangosteen, argan nut shells, chaff, dandelion, straw cores, ramie fibers, cotton, kelp, and coconut endocarp. In using a polymer as the carbon material precursor, examples include PAN (polyacrylonitrile), pitch, PVC (polyvinyl chloride) nanofibers, polyaniline, sodium polyacrylate, tire (polymer for tire), and phosphorus-doped PAN.

Next, the solution of solid electrolyte precursor and the carbon material precursor are mixed and then dried. Thus, a powder mixture of the solid electrolyte precursor and the carbon material precursor is obtained. Next, a hard carbon powder as the first negative-electrode active material 6 is added to the powder mixture and they are mixed, in an organic solvent, with a conductive agent and a binder as needed. An example of the organic solvent that can be used is N-methyl-2-pyrrolidone. Thus, a paste is obtained.

As just described, the second embodiment is the same as the first embodiment except that a carbon material precursor powder is added to a solution of solid electrolyte precursor to form a powder mixture.

As in the second embodiment, the first negative electrode layer 24 may contain: a particulate first negative-electrode active material 6; and a mixture phase 27 constituted by a mixture of hard carbon and a solid electrolyte.

### (Third Embodiment)

Fig. 3 is a schematic cross-sectional view showing a negative electrode for a sodium-ion secondary battery and a sodium-ion secondary battery according to a third embodiment of the present invention.

As shown in Fig. 3, in a negative electrode layer 31 of a sodium-ion secondary battery 30, a first negative electrode layer 34 is constituted by a mixture phase 37 of a first negative-electrode active material containing a carbon material and a solid electrolyte.

As the first negative-electrode active material, hard carbon formed using a carbon material precursor to be described hereinafter can be used.

The content of the first negative-electrode active material in the first negative electrode layer 34 is, in terms of % by mass, preferably not less than 20%, more preferably not less than 50%, even more preferably not less than 70%, preferably not more than 95%, more preferably not more than 90%, and even more preferably not more than 80%. When the content of the first negative-electrode active material in the first negative electrode layer 34 is within the above range, the battery characteristics, such as charge and discharge capacities, of the sodium-ion secondary battery 30 can be more effectively improved.

The content of the solid electrolyte in the first negative electrode layer 34 is, in terms of % by mass, preferably not less than 5%, more preferably not less than 10%, even more preferably not less than 20%, preferably not more than 80%, more preferably not more than 50%, and even more preferably not more than 30%. When the content of the solid electrolyte in the first negative electrode layer 34 is within the above range, the ionic conductivity can be further improved and the battery characteristics of the sodium-ion secondary battery 30 can be more effectively improved.

The first negative electrode layer 34 can be formed, for example, by the following method.

First, a paste containing a carbon material precursor and a solid electrolyte is made. In making the paste, first, a solid electrolyte precursor is prepared. In this stage, it is preferred to prepare a solution of solid electrolyte precursor. Specific examples of the solid electrolyte precursor and its solution will be described later. Furthermore, a carbon material precursor (a precursor of a carbon material made of hard carbon) is prepared. Examples of the carbon material precursor that can be used include appropriate sugars, biomass, and polymers.

In using a sugar as the carbon material precursor, examples include sucrose, cellulose, D-glucose, and sucrose. In using biomass as the carbon material precursor, examples include cornstalks, sorghum stalks, pine cones, mangosteen, argan nut shells, chaff, dandelion, straw cores, ramie fibers, cotton, kelp, and coconut endocarp. In using a polymer as the carbon material precursor, examples include PAN (polyacrylonitrile), pitch, PVC (polyvinyl chloride) nanofibers, polyaniline, sodium polyacrylate, tire (polymer for tire), and phosphorus-doped PAN.

Next, the solution of solid electrolyte precursor and the carbon material precursor are mixed and then dried. Thus, a powder mixture of the solid electrolyte precursor and the carbon material precursor is obtained. Next, the powder mixture is mixed, in an organic solvent, with a conductive agent and a binder as needed. An example of the organic solvent that can be used is N-methyl-2-pyrrolidone. Thus, a paste is obtained.

As just described, the third embodiment is the same as the second embodiment except that a hard carbon powder is not added into the paste.

As in the third embodiment, the first negative electrode layer 34 may be composed of a mixture phase 37 constituted by: a first negative-electrode active material; and a mixture of hard carbon and a solid electrolyte.

### (Fourth Embodiment)

Fig. 4 is a schematic cross-sectional view showing a negative electrode for a sodium-ion secondary battery and a sodium-ion secondary battery according to a fourth embodiment of the present invention.

As shown in Fig. 4, a negative electrode layer 41 of a sodium-ion secondary battery 40 is composed of: a second negative-electrode active material 47 serving as a matrix; and a particulate first negative-electrode active material 46 disposed in the matrix.

The first negative-electrode active material 46 contains a carbon material. As the first negative-electrode active material 46, materials described about the first negative-electrode active material 6 in the first embodiment can be appropriately used.

The second negative-electrode active material 47 contains a sodium-containing alloy. As the sodium-containing alloy, those described in relation to the second negative-electrode active material in the first embodiment can be appropriately used.

The content of the first negative-electrode active material 46 in the negative electrode layer 41 is not particularly limited, but is preferably not less than 45% by mass, more preferably not less than 70% by mass, preferably not more than 97% by mass, and more preferably not more than 85% by mass. In this case, the battery characteristics, such as charge and discharge capacities, of the sodium-ion secondary battery 40 can be further improved.

The content of the second negative-electrode active material 47 in the negative electrode layer 41 is not particularly limited, but is preferably not less than 3% by mass, more preferably not less than 15% by mass, preferably not more than 55% by mass, and more preferably not more than 30% by mass. In this case, the initial charge-discharge efficiency and cycle characteristics of the sodium-ion secondary battery 40 can be further improved.

The negative electrode layer 41 can be formed, for example, by the following method.

The negative electrode layer 41 can be formed by first applying a paste for forming a negative electrode layer 41 onto the second principal surface 2b of the solid electrolyte layer 2 and drying and firing the paste.

An example of the paste for forming a negative electrode layer 41 is a paste containing a first negative-electrode active material 46, such as hard carbon, and a second negative-electrode active material 47, such as a sodium-containing alloy, and also containing a binder and a conductive agent as needed.

As in the fourth embodiment, the negative electrode layer 41 may be a single-layered negative electrode layer composed of: a second negative-electrode active material 47 serving as a matrix; and a particulate first negative-electrode active material 46 disposed in the matrix.

### (Fifth Embodiment)

Fig. 5 is a schematic cross-sectional view showing a negative electrode for a sodium-ion secondary battery and a sodium-ion secondary battery according to a fifth embodiment of the present invention.

As shown in Fig. 5, a negative electrode layer 51 of a sodium-ion secondary battery 50 contains: a particulate first negative-electrode active material 56; a particulate second negative-electrode active material 57; and a solid electrolyte 52a.

The first negative-electrode active material 56 contains a carbon material. As the first negative-electrode active material 56, materials described about the first negative-electrode active material 6 in the first embodiment can be used.

The second negative-electrode active material 57 contains a sodium-containing alloy. As the sodium-containing alloy, those described in relation to the second negative-electrode active material contained in the second negative electrode layer 5 in the first embodiment can be used.

The material for the solid electrolyte 52a is not particularly limited and examples that can be used include: liquid glass (Na₂O-nSiO₂·xH₂O) (where n = 0.5 to 4); and sodium silicate (Na₂O-nSiO₂) (where n = 0.5 to 4). Among them, liquid glass can be preferably used because it can double as a binder in forming the negative electrode layer 51.

The content of the first negative-electrode active material 56 in the negative electrode layer 51 is not particularly limited, but is preferably not less than 20% by mass, more preferably not less than 45% by mass, preferably not more than 92% by mass, and more preferably not more than 77% by mass. In this case, the battery characteristics, such as charge and discharge capacities, of the sodium-ion secondary battery 50 can be further improved.

The content of the second negative-electrode active material 57 in the negative electrode layer 51 is not particularly limited, but is preferably not less than 1% by mass, more preferably not less than 3% by mass, preferably not more than 52% by mass, and more preferably not more than 27% by mass. In this case, the initial charge-discharge efficiency and cycle characteristics of the sodium-ion secondary battery 50 can be further improved.

The content of the solid electrolyte 52a in the negative electrode layer 51 is not particularly limited, but is preferably not less than 5% by mass, more preferably not less than 10% by mass, preferably not more than 50% by mass, and more preferably not more than 30% by mass. In this case, the ionic conductivity in the negative electrode layer 51 can be further improved.

The negative electrode layer 51 can be formed, for example, by the following method.

The negative electrode layer 51 can be formed by first applying a paste for forming a negative electrode layer 51 onto the second principal surface 2b of the solid electrolyte layer 2, drying and firing the paste, and bonding them together by pressure.

An example of the paste for forming a negative electrode layer 51 is a paste containing a first negative-electrode active material 56, such as hard carbon, a second negative-electrode active material 57, such as a sodium-containing alloy, and a precursor of the solid electrolyte 52a, and also containing a binder, a solvent, and a conductive agent as needed.

Also in the second to fifth embodiments, since the negative electrode layer contains not only a first negative-electrode active material containing a carbon material, but also a second negative-electrode active material containing a sodium-containing alloy, the initial charge-discharge efficiency of the sodium-ion secondary battery can be increased and the cycle characteristics thereof can be increased.

Although the description in the first to fifth embodiments has been given of the case where the sodium-ion secondary battery is an all-solid-state sodium-ion secondary battery, the sodium-ion secondary battery may be an electrolytic solution-based sodium-ion secondary battery as in the following sixth to ninth embodiments.

### [Sixth to Ninth Embodiments]

### (Sixth Embodiment)

Fig. 6 is a schematic cross-sectional view showing a negative electrode for a sodium-ion secondary battery and a sodium-ion secondary battery according to a sixth embodiment of the present invention.

As shown in Fig. 6, a sodium-ion secondary battery 60 is an electrolytic solution-based sodium-ion secondary battery including: a positive electrode layer 3; a negative electrode layer 61 (a negative electrode for a sodium-ion secondary battery); an electrolytic solution 62; a separator 68; and a current collector 69.

The negative electrode layer 61 includes a first negative electrode layer 64 and a second negative electrode layer 65. The second negative electrode layer 65 is provided on the current collector 69. The first negative electrode layer 64 is provided on the second negative electrode layer 65. Therefore, the first negative electrode layer 64 is provided on the side of the positive electrode layer 3.

The first negative electrode layer 64 contains a first negative-electrode active material 6. The first negative-electrode active material 6 contains a carbon material. As the first negative-electrode active material 6, materials described in the first embodiment can be appropriately used.

The content of the first negative-electrode active material 6 in the first negative electrode layer 64 is not particularly limited, but is preferably not less than 70% by mass, more preferably not less than 90% by mass, preferably not more than 97% by mass, and more preferably not more than 95% by mass. In this case, the battery characteristics, such as charge and discharge capacities, of the sodium-ion secondary battery 60 can be further improved.

The second negative electrode layer 65 contains a second negative-electrode active material. The second negative-electrode active material contains a sodium-containing alloy. As the second negative electrode layer 65, materials described in relation to the second negative electrode layer 5 in the first embodiment can be used. Also regarding the positive electrode layer 3 and the current collector 69, materials described in the first embodiment can be appropriately used.

Examples that can be used as the electrolytic solution 62 include an organic solvent-based electrolytic solution and an ionic liquid. Examples of the organic solvent-based electrolytic solution that can be used include 1M NaPF₆ EC:DEC and 1M NaPF₆ PC. Examples of the ionic liquid that can be used include NaFSI, NaTFSI, Pyr13FSI, EMIMFSI, and MPPyFSI.

The negative electrode layer 61 can be formed, for example, by the following method.

First, a second negative electrode layer 65 is formed on a current collector 69 made of, for example, an aluminum foil. The second negative electrode layer 65 can be formed by forming a sodium-containing alloy into a film, for example, by sputtering or vapor deposition.

Next, a paste for forming a first negative electrode layer 64 is applied onto the second negative electrode layer 65, dried, fired, and then bonded together with the second negative electrode layer 65 by pressure to form a first negative electrode layer 64. In this manner, the negative electrode layer 61 can be formed.

An example of the paste for forming a first negative electrode layer 64 is a paste containing a first negative-electrode active material 6, such as hard carbon, and also containing a binder, a solvent, and a conductive agent as needed.

### (Seventh Embodiment)

Fig. 7 is a schematic cross-sectional view showing a negative electrode for a sodium-ion secondary battery and a sodium-ion secondary battery according to a seventh embodiment of the present invention.

As shown in Fig. 7, in a negative electrode layer 71 of a sodium-ion secondary battery 70, a first negative electrode layer 64 and a second negative electrode layer 65 are provided in this order on a current collector 69. Therefore, in the negative electrode layer 71, the second negative electrode layer 65 is provided on the side thereof closer to a positive electrode layer 3. Although in Fig. 7 the second negative electrode layer 65 is described linearly, the second negative electrode layer 65 is, actually, provided to coat the material of the first negative electrode layer 64. The rest is the same as in the sixth embodiment.

As in the seventh embodiment, in the electrolytic solution-based sodium-ion secondary battery 70, the second negative electrode layer 65 may be disposed on the side of the positive electrode layer 3.

### (Eighth Embodiment)

Fig. 8 is a schematic cross-sectional view showing a negative electrode for a sodium-ion secondary battery and a sodium-ion secondary battery according to an eighth embodiment of the present invention.

As shown in Fig. 8, a negative electrode layer 81 of a sodium-ion secondary battery 80 contains: a particulate first negative-electrode active material 86; and a particulate second negative-electrode active material 87.

The first negative-electrode active material 86 contains a carbon material. As the first negative-electrode active material 86, materials described about the first negative-electrode active material 6 in the first embodiment can be appropriately used.

The second negative-electrode active material 87 contains a sodium-containing alloy. As the sodium-containing alloy, those described in relation to the second negative-electrode active material in the first embodiment can be appropriately used.

The content of the first negative-electrode active material 86 in the negative electrode layer 81 is not particularly limited, but is preferably not less than 45% by mass, more preferably not less than 70% by mass, preferably not more than 97% by mass, and more preferably not more than 85% by mass. In this case, the battery characteristics, such as charge and discharge capacities, of the sodium-ion secondary battery 80 can be further improved.

The content of the second negative-electrode active material 87 in the negative electrode layer 81 is not particularly limited, but is preferably not less than 3% by mass, more preferably not less than 15% by mass, preferably not more than 55% by mass, and more preferably not more than 30% by mass. In this case, the initial charge-discharge efficiency and cycle characteristics of the sodium-ion secondary battery 80 can be further improved.

The negative electrode layer 81 can be formed, for example, by the following method.

The negative electrode layer 81 can be formed by first applying a paste for forming a negative electrode layer 81 onto a current collector 69 made of, for example, an aluminum foil, drying and firing the paste, and bonding them together by pressure.

An example of the paste for forming a negative electrode layer 81 is a paste containing a first negative-electrode active material 86, such as hard carbon, and a second negative-electrode active material 87, such as a sodium-containing alloy, and also containing a binder, a solvent, and a conductive agent as needed. As the binder, binders described in the first embodiment may be used or liquid glass (Na₂O-nSiO₂) may be used. When the binder is liquid glass, the adhesiveness can be further improved.

As in the eighth embodiment, the negative electrode layer 81 may be a single-layered negative electrode layer containing a particulate first negative-electrode active material 86 and a particulate second negative-electrode active material 87.

### (Ninth Embodiment)

Fig. 9 is a schematic cross-sectional view showing a negative electrode for a sodium-ion secondary battery and a sodium-ion secondary battery according to a ninth embodiment of the present invention.

As shown in Fig. 9, a negative electrode layer 91 of a sodium-ion secondary battery 90 is composed of: a second negative-electrode active material 97 serving as a matrix; and a particulate first negative-electrode active material 96 disposed in the matrix.

The first negative-electrode active material 96 contains a carbon material. As the first negative-electrode active material 96, materials described about the first negative-electrode active material 6 in the first embodiment can be appropriately used.

The second negative-electrode active material 97 contains a sodium-containing alloy. As the sodium-containing alloy, those described in relation to the second negative-electrode active material in the first embodiment can be appropriately used.

The content of the first negative-electrode active material 96 in the negative electrode layer 91 is not particularly limited, but is preferably not less than 45% by mass, more preferably not less than 70% by mass, preferably not more than 97% by mass, and more preferably not more than 85% by mass. In this case, the battery characteristics, such as charge and discharge capacities, of the sodium-ion secondary battery 90 can be further improved.

The content of the second negative-electrode active material 97 in the negative electrode layer 91 is not particularly limited, but is preferably not less than 3% by mass, more preferably not less than 15% by mass, preferably not more than 55% by mass, and more preferably not more than 30% by mass. In this case, the initial charge-discharge efficiency and cycle characteristics of the sodium-ion secondary battery 90 can be further improved.

The negative electrode layer 91 can be formed, for example, by the following method.

The negative electrode layer 91 can be formed by first applying a paste for forming a negative electrode layer 91 onto a current collector 69 made of, for example, an aluminum foil, drying and firing the paste, and bonding them together by pressure.

An example of the paste for forming a negative electrode layer 91 is a paste containing a first negative-electrode active material 96, such as hard carbon, and a second negative-electrode active material 97, such as a sodium-containing alloy, and also containing a binder and a conductive agent as needed.

As in the ninth embodiment, the negative electrode layer 91 may be a single-layered negative electrode layer composed of: a second negative-electrode active material 97 serving as a matrix; and a particulate first negative-electrode active material 96 disposed in the matrix.

Also in the electrolytic solution-based sodium-ion secondary battery as in the sixth to ninth embodiments, since the negative electrode layer contains not only a first negative-electrode active material containing a carbon material, but also a second negative-electrode active material containing a sodium-containing alloy, the initial charge-discharge efficiency of the sodium-ion secondary battery can be increased and the cycle characteristics thereof can be improved.

Hereinafter, the present invention will be described in more detail with reference to specific examples, but the present invention is not at all limited to the following examples and can be embodied in appropriately modified forms without changing the gist of the invention.

### (Example 1)

### (a) Preparation of Solid Electrolyte Layer

A 50 µm thick solid electrolyte layer made of β"-alumina was prepared.

### (b) Making of Paste for Forming First Negative Electrode Layer

To obtain NASICON crystals having a composition of Na₃Zr₂Si₂PO₁₂, sodium silicate (Na₂O·3SiO₂) , an aqueous solution of ammonium zirconium carbonate ((NH₄)₂Zr(OH)₂(CO₃)₂) , and sodium tripolyphosphate (Na₅P₃O₁₀) were weighed to a total of 25 g. These materials were added into 150 g of pure water and the mixture was stirred at 50°C for 24 hours. Thus, a solution of sodium-ion conductive solid electrolyte precursor (pH = 9.7) was obtained. Next, this solution was put into a thermostat bath at 5°C and left therein to stand overnight, thus turning it into a gel. In the above manner, a sodium-ion conductive solid electrolyte precursor was prepared. Next, the sodium-ion conductive solid electrolyte precursor was dried in a dryer at 60°C for 12 hours, then vacuum dried at 100°C for 6 hours, thus obtaining a powder of the sodium-ion conductive solid electrolyte precursor. Next, the powder was ground into fine powder in an agate mortar.

The fine powder of sodium-ion conductive solid electrolyte precursor and a conductive agent (acetylene black) were weighed in a weight ratio of 19:1 and mixed to obtain a mixed powder. An amount of 30 parts by mass of the mixed powder was mixed with 70 parts by mass of hard carbon powder (average particle diameter D50: 1 µm) , thus obtaining a negative electrode composite material powder. An amount of 15% by mass of polypropylene carbonate (PPC) as a binder was further added to 100% by mass of the negative electrode composite material powder and N-methyl-2-pyrrolidone was further added as a solvent to make the concentration of the negative electrode composite material powder 50% by mass. These materials were mixed in a planetary centrifugal mixer, thus making a paste for forming a first negative electrode layer.

### (c) Making of Paste for Forming Positive Electrode

A glass powder having a composition of 40Na₂O-20Fe₂O₃-40P₂O₅ in terms of molar ratio (BET specific surface area: 35 m²/g), β"-alumina as a solid electrolyte, and acetylene black (AB) as a conductive agent were mixed in a mass ratio of 83:12:5, thus obtaining a positive electrode composite material powder. An amount of 12% by mass of polypropylene carbonate (PPC) was added as a binder to 100% by mass of the positive electrode composite material powder and N-methyl-2-pyrrolidone was further added as a solvent to make the solid content concentration of the positive electrode composite material and the binder 50% by mass. These materials were mixed in a planetary centrifugal mixer, thus making a paste for forming a positive electrode.

### (d) Making of First Negative Electrode Layer

The center of one principal surface of the solid electrolyte layer having a size of 12 mm square and a thickness of 50 µm was coated with the paste for forming a first negative electrode layer, the paste having a thickness of 50 µm and a size of 10 mm square, followed by drying for an hour in a thermostat bath at 60°C. Thereafter, the solid electrode layer with the paste was fired under conditions of 800°C for 2 hours in an N₂ (99.99%) atmosphere, thus forming a first negative electrode layer. The weight of the first negative electrode layer supported was obtained from (the weight of a laminate after formation of the first negative electrode layer) minus (the weight of the solid electrolyte layer). The weight of the first negative-electrode active material supported in the first negative electrode layer calculated by multiplying the above obtained weight by 0.8, which is a ratio of the weight of hard carbon as the first negative-electrode active material to the obtained weight, was 3.5 mg/cm². Furthermore, the capacity of the first negative electrode layer was calculated by assuming the capacity of the hard carbon to be 300 mAh/g. As a result, the capacity of the first negative electrode layer was 1.05 mAh/cm².

### (e) Making of Positive Electrode Layer

The center of the other principal surface of the solid electrolyte layer located on the side thereof opposite to the first negative electrode layer was coated with the paste for a positive electrode, the paste having a thickness of 400 µm and a size of 10 mm square. The laminate with the paste was dried for 2 hours in a thermostat bath at 60°C and then fired under conditions where it was held at 500°C for 30 minutes in an N₂/H₂ (96/4 in terms of volume ratio) atmosphere, thus forming a positive electrode layer. The weight of the positive electrode layer supported was obtained from (the weight of the laminate after formation of the positive electrode layer) minus (the weight of the laminate before formation of the positive electrode layer). The weight of Na₂FeP₂O₇ as a positive-electrode active material was calculated by multiplying the above obtained weight by 0.83, which is a ratio of the weight of the positive-electrode active material to the obtained weight. The amount of positive-electrode active material supported in the positive electrode layer was 10.5 mg/cm². The capacity of the positive electrode layer was calculated by assuming the capacity of Na₂FeP₂O₇ crystallized glass (Na₂FeP₂O₇ as the positive-electrode active material) to be a theoretical capacity of 97 mAh/g. As a result, the capacity of the positive electrode layer was 1.02 mAh/cm².

### (f) Formation of Current Collector and Second Negative Electrode Layer and Assembly of Coin Cell

A 500 nm thick vapor-deposited aluminum film was formed as a current collector on the entire surface of the positive electrode layer. Thereafter, in an argon glove box, a sodium-containing alloy Na₉Sn₄ as a second negative-electrode active material was deposited into a film on the first negative electrode layer by vacuum vapor deposition to form a second negative electrode layer, thus forming a negative electrode layer (a negative electrode for a sodium-ion secondary battery). The amount of second negative-electrode active material supported in the second negative electrode layer was 0.46 mg/cm² and the thickness thereof was 1.8 µm.

The obtained electricity storage device was encapsulated into a CR2032 coin cell, thus producing a test battery (a sodium-ion secondary battery).

### (g) Charge-Discharge Test

The test battery underwent a constant-current charge-discharge test in a thermostat bath at 30°C. Specifically, the charge capacity, the discharge capacity, and the operating voltage of the test battery were measured with reference to the capacity of the positive electrode layer by setting a current value to give a C-rate of 0.05 (charge and discharge for 20 hours), charging the test battery at a cut-off voltage of 4.5 V, and discharging it at a cut-off voltage of 1.5 V. Furthermore, the percentage of the initial discharge capacity to the initial charge capacity was calculated as the initial charge-discharge efficiency.

### (Examples 2 to 8)

Test batteries (sodium-ion secondary batteries) were produced in the same manner as in Example 1 except that the type of sodium-containing alloy in the second negative electrode layer, the amount of second negative-electrode active material supported in the second negative electrode layer, and the thickness of the second negative electrode layer were changed as shown in Table 1 below, and underwent the charge-discharge test.

The results are shown in Table 1 below.

**[Table 1]**

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Positive Electrode Layer | Amount of Positive-Electrode Active Material Supported (mg/cm²) | 10.5 | 10.5 | 10.5 | 10.5 | 10.5 | 10.5 | 10.5 | 10.5 |
| | Capacity (mAh/cm²) | 1.02 | 1.02 | 1.02 | 1.02 | 1.02 | 1.02 | 1.02 | 1.02 |
| First Negative Electrode Layer | Negative-Electrode Active Material | hard carbon | hard carbon | hard carbon | hard carbon | hard carbon | hard carbon | hard carbon | hard carbon |
| | Solid Electrolyte | NASICON | NASICON | NASICON | NASICON | NASICON | NASICON | NASICON | NASICON |
| | Amount of Negative-Electrode Active Material Supported (mg/cm²) | 3.5 | 3.5 | 3.5 | 3.5 | 3.5 | 3.5 | 3.5 | 3.5 |
| | Capacity (mAh/cm²) | 1.05 | 1.05 | 1.05 | 1.05 | 1.05 | 1.05 | 1.05 | 1.05 |
| Second Negative Electrode Layer | Type | Na₉Sn₄ | Na₉Sn₄ | Na₃Sn | Na₃Sn | NaSn | NaSn | NaSn₃ | NaSn₃ |
| | Amount Supported (mg/cm²) | 0.46 | 0.60 | 0.34 | 0.45 | 0.80 | 1.20 | 2.10 | 3.60 |
| | Thickness (µm ) | 1.8 | 2.3 | 1.5 | 2.0 | 2.1 | 3.2 | 4.0 | 6.8 |
| Battery Characteristics | Charge Capacity (mAh/cm²) | 1.02 | 1.02 | 1.02 | 1.02 | 1.02 | 1.02 | 1.02 | 1.02 |
| | Discharge Capacity (mAh/cm²) | 0.94 | 1.01 | 0.94 | 1.01 | 0.89 | 0.98 | 0.86 | 0.98 |
| | Initial Charge-Discharge Efficiency (%) | 92.2% | 99.0% | 92.2% | 99.0% | 87.3% | 96.1% | 84.3% | 96.1% |
| | Operating Voltage (V) | 3.05 | 3.06 | 3.05 | 3.06 | 3.00 | 3.01 | 2.98 | 2.98 |

### (Example 9)

A test battery (a sodium-ion secondary battery) was produced in the same manner as in Example 1 except that (b) Making of Paste for Forming First Negative Electrode Layer, (d) Making of First Negative Electrode Layer, and (f) Formation of Current Collector and Second Negative Electrode Layer and Assembly of Coin Cell were done in the following manners, and underwent the charge-discharge test.

### (b) Making of Paste for Forming First Negative Electrode Layer

To obtain NASICON crystals having a composition of Na₃Zr₂Si₂PO₁₂, sodium silicate (Na₂O·3SiO₂) , an aqueous solution of ammonium zirconium carbonate ((NH₄)₂Zr(OH)₂(CO₃)₂), and sodium tripolyphosphate (Na₅P₃O₁₀) were weighed to a total of 25 g. These materials were added into 150 g of pure water and the mixture was stirred at 50°C for 24 hours. Thus, a solution of sodium-ion conductive solid electrolyte precursor (pH = 9.7) was obtained. Next, this solution was put into a thermostat bath at 5°C and left therein to stand overnight, thus turning it into a gel. In the above manner, a sodium-ion conductive solid electrolyte precursor was prepared.

Sucrose as a source of hard carbon, which is a carbon electrode material precursor, and the solution of sodium-ion conductive solid electrolyte precursor were mixed in a weight ratio of 7:1 in a stirrer for an hour, thus obtaining a mixture. Next, the mixture was dried in a dryer at 60°C for 12 hours, then vacuum dried at 100°C for 6 hours, thus obtaining a mixture powder of the sodium-ion conductive solid electrolyte precursor and the carbon electrode material precursor. Next, the mixture powder was ground into fine powder in an agate mortar.

The obtained fine mixed powder of sodium-ion conductive solid electrolyte precursor and carbon electrode material precursor and a conductive agent (acetylene black) were weighed in a weight ratio of 19:1 and mixed to obtain a mixed powder. An amount of 60 parts by mass of the mixed powder was mixed with 40 parts by mass of hard carbon powder (average particle diameter D50: 1 µm), thus obtaining a negative electrode composite material powder. An amount of 15% by mass of polypropylene carbonate (PPC) as a binder was further added to 100% by mass of the negative electrode composite material powder and N-methyl-2-pyrrolidone was further added as a solvent to make the concentration of the negative electrode composite material powder 50% by mass. These materials were mixed in a planetary centrifugal mixer, thus making a paste for forming a first negative electrode layer.

### (d) Making of First Negative Electrode Layer

The center of one principal surface of the solid electrolyte layer having a size of 12 mm square and a thickness of 50 µm was coated with the paste for forming a first negative electrode layer, the paste having a thickness of 50 µm and a size of 10 mm square, followed by drying for an hour in a thermostat bath at 60°C. Thereafter, the solid electrode layer with the paste was fired under conditions of 800°C for 2 hours in an N₂ (99.99%) atmosphere, thus forming a first negative electrode layer. The weight of the first negative electrode layer supported was obtained from (the weight of a laminate after formation of the first negative electrode layer) minus (the weight of the solid electrolyte layer). The weight of the first negative-electrode active material supported in the first negative electrode layer calculated by multiplying the above obtained weight by 84% by weight, which is a percentage of the weight of hard carbon (the total weight of sucrose-derived hard carbon and later mixed hard carbon) as the first negative-electrode active material to the obtained weight, was 3.5 mg/cm². Furthermore, the capacity of the first negative electrode layer was calculated by assuming the capacity of the hard carbon mixture to be 300 mAh/g. As a result, the capacity of the first negative electrode layer was 1.04 mAh/cm².

### (f) Formation of Current Collector and Second Negative Electrode Layer and Assembly of Coin Cell

A 500 nm thick vapor-deposited aluminum film was formed as a current collector on the entire surface of the positive electrode layer. Thereafter, in an argon glove box, a sodium-containing alloy Na₉Sn₄ as a second negative-electrode active material was deposited into a film on the first negative electrode layer by vacuum vapor deposition to form a second negative electrode layer, thus forming a negative electrode layer (a negative electrode for a sodium-ion secondary battery). The amount of second negative-electrode active material supported in the second negative electrode layer was 0.28 mg/cm² and the thickness thereof was 1.1 µm.

The obtained electricity storage device was encapsulated into a CR2032 coin cell, thus producing a test battery (a sodium-ion secondary battery).

### (Examples 10 to 16)

Test batteries (sodium-ion secondary batteries) were produced in the same manner as in Example 9 except that the type of sodium-containing alloy in the second negative electrode layer, the amount of second negative-electrode active material supported in the second negative electrode layer, and the thickness of the second negative electrode layer were changed as shown in Table 2 below, and underwent the charge-discharge test.

The results are shown in Table 2 below.

**[Table 2]**

| | | Ex. 9 | Ex. 10 | Ex. 11 | Ex. 12 | Ex. 13 | Ex. 14 | Ex. 15 | Ex. 16 |
|---|---|---|---|---|---|---|---|---|---|
| Positive Electrode Layer | Amount of Positive-Electrode Active Material Supported (mg/cm²) | 10.5 | 10.5 | 10.5 | 10.5 | 10.5 | 10.5 | 10.5 | 10.5 |
| | Capacity (mAh/cm²) | 1.02 | 1.02 | 1.02 | 1.02 | 1.02 | 1.02 | 1.02 | 1.02 |
| First Negative Electrode Layer | Negative-Electrode Active Material | hard carbon | hard carbon | hard carbon | hard carbon | hard carbon | hard carbon | hard carbon | hard carbon |
| | Solid Electrolyte | C-NASICON | C-NASICON | C-NASICON | C-NASICON | C-NASICON | C-NASICON | C-NASICON | C-NASICON |
| | Amount of Negative-Electrode Active Material Supported (mg/cm²) | 3.5 | 3.5 | 3.5 | 3.5 | 3.5 | 3.5 | 3.5 | 3.5 |
| | Capacity (mAh/cm²) | 1.05 | 1.05 | 1.05 | 1.05 | 1.05 | 1.05 | 1.05 | 1.05 |
| Second Negative Electrode Layer | Type | Na₉Sn₄ | Na₉Sn₄ | Na₃Sn | Na₃Sn | NaSn | NaSn | NaSn₃ | NaSn₃ |
| | Amount Supported (mg/cm²) | 0.28 | 0.42 | 0.16 | 0.27 | 0.62 | 1.00 | 1.92 | 2.80 |
| | Thickness (µm ) | 1.1 | 1.6 | 0.7 | 1.2 | 1.6 | 2.6 | 3.6 | 5.3 |
| Battery Characteristics | Charge Capacity (mAh/cm²) | 1.02 | 1.02 | 1.02 | 1.02 | 1.02 | 1.02 | 1.02 | 1.02 |
| | Discharge Capacity (mAh/cm²) | 0.93 | 1.00 | 0.90 | 0.97 | 0.93 | 1.02 | 0.93 | 1.00 |
| | Initial Charge-Discharge Efficiency (%) | 91.2% | 98.0% | 88.2% | 95.1% | 91.2% | 100.0% | 91.2% | 98.0% |
| | Operating Voltage (V) | 3.06 | 3.06 | 3.05 | 3.06 | 2.99 | 3.00 | 2.98 | 2.99 |

### (Example 17)

A test battery (a sodium-ion secondary battery) was produced in the same manner as in Example 1 except that (b) Making of Paste for Forming First Negative Electrode Layer, (d) Making of First Negative Electrode Layer, and (f) Formation of Current Collector and Second Negative Electrode Layer and Assembly of Coin Cell were done in the following manners, and underwent the charge-discharge test.

### (b) Making of Paste for Forming First Negative Electrode Layer

To obtain NASICON crystals having a composition of Na₃Zr₂Si₂PO₁₂, sodium silicate (Na₂O·3SiO₂) , an aqueous solution of ammonium zirconium carbonate ((NH₄)₂Zr(OH)₂(CO₃)₂), and sodium tripolyphosphate (Na₅P₃O₁₀) were weighed to a total of 25 g. These materials were added into 150 g of pure water and the mixture was stirred at 50°C for 24 hours. Thus, a solution of sodium-ion conductive solid electrolyte precursor (pH = 9.7) was obtained. Next, this solution was put into a thermostat bath at 5°C and left therein to stand overnight, thus turning it into a gel. In the above manner, a sodium-ion conductive solid electrolyte precursor was prepared.

Sucrose as a source of hard carbon, which is a carbon electrode material precursor, and the solution of sodium-ion conductive solid electrolyte precursor were mixed in a weight ratio of 7:1 in a stirrer for an hour, thus obtaining a mixture. Next, the mixture was dried in a dryer at 60°C for 12 hours, then vacuum dried at 100°C for 6 hours, thus obtaining a mixture powder of the sodium-ion conductive solid electrolyte precursor and the carbon electrode material precursor. Next, the mixture powder was ground into fine powder in an agate mortar.

The obtained fine mixed powder of sodium-ion conductive solid electrolyte precursor and carbon electrode material precursor and a conductive agent (acetylene black) were weighed in a weight ratio of 19:1 and mixed to obtain a negative electrode composite material powder. An amount of 15% by mass of polypropylene carbonate (PPC) as a binder was added to 100% by mass of the negative electrode composite material powder and N-methyl-2-pyrrolidone was further added as a solvent to make the concentration of the negative electrode composite material powder 50% by mass. These materials were mixed in a planetary centrifugal mixer, thus making a paste for forming a first negative electrode layer.

### (d) Making of First Negative Electrode Layer

The center of one principal surface of the solid electrolyte layer having a size of 12 mm square and a thickness of 50 µm was coated with the paste for forming a first negative electrode layer, the paste having a thickness of 50 µm and a size of 10 mm square, followed by drying for an hour in a thermostat bath at 60°C. Thereafter, the solid electrode layer with the paste was fired under conditions of 800°C for 2 hours in an N₂ (99.99%) atmosphere, thus forming a first negative electrode layer. The weight of the first negative electrode layer supported was obtained from (the weight of a laminate after formation of the first negative electrode layer) minus (the weight of the solid electrolyte layer). The weight of the first negative-electrode active material supported in the first negative electrode layer calculated by multiplying the above obtained weight by 75% by weight, which is a percentage of the weight of sucrose-derived hard carbon as the first negative-electrode active material to the obtained weight, was 2.6 mg/cm². Furthermore, the capacity of the first negative electrode layer was calculated by assuming the capacity of the sucrose-derived hard carbon to be 400 mAh/g. As a result, the capacity of the first negative electrode layer was 1.04 mAh/cm².

### (f) Formation of Current Collector and Second Negative Electrode Layer and Assembly of Coin Cell

A 500 nm thick vapor-deposited aluminum film was formed as a current collector on the entire surface of the positive electrode layer. Thereafter, in an argon glove box, a sodium-containing alloy Na₉Sn₄ as a second negative-electrode active material was deposited into a film on the first negative electrode layer by vacuum vapor deposition to form a second negative electrode layer, thus forming a negative electrode layer (a negative electrode for a sodium-ion secondary battery). The amount of second negative-electrode active material supported in the second negative electrode layer was 0.46 mg/cm² and the thickness thereof was 1.8 µm.

The obtained electricity storage device was encapsulated into a CR2032 coin cell, thus producing a test battery (a sodium-ion secondary battery).

### (Example 18)

A test battery (a sodium-ion secondary battery) was produced in the same manner as in Example 17 except that the type of sodium-containing alloy in the second negative electrode layer, the amount of second negative-electrode active material supported in the second negative electrode layer, and the thickness of the second negative electrode layer were changed as shown in Table 3 below, and underwent the charge-discharge test.

The results are shown in Table 3 below.

**[Table 3]**

| | | Ex. 17 | Ex. 18 |
|---|---|---|---|
| Positive Electrode Layer | Amount of Positive-Electrode Active Material Supported (mg/cm²) | 10.5 | 10.5 |
| | Capacity (mAh/cm²) | 1.02 | 1.02 |
| First Negative Electrode Layer | Negative-Electrode Active Material | sucrose-derived hard carbon | sucrose-derived hard carbon |
| | Solid Electrolyte | C-NASICON | C-NASICON |
| | Amount of Negative-Electrode Active Material Supported (mg/cm²) | 2.6 | 2.6 |
| | Capacity (mAh/cm²) | 1.04 | 1.04 |
| Second Negative Electrode Layer | Type | Na₉Sn₄ | NaSn₃ |
| | Amount Supported (mg/cm²) | 0.46 | 2.90 |
| | Thickness (µm ) | 1.8 | 5.5 |
| Battery Characteristics | Charge Capacity (mAh/cm²) | 1.02 | 1.02 |
| | Discharge Capacity (mAh/cm²) | 0.84 | 0.82 |
| | Initial Charge-Discharge Efficiency (%) | 82.4% | 80.4% |
| | Operating Voltage (V) | 3.01 | 2.99 |

### (Comparative Example 1)

A test battery (a sodium-ion secondary battery) was produced in the same manner as in Example 1 except that the following metallic layer was formed instead of the second negative electrode layer, and underwent the charge-discharge test.

### Making of Metallic Layer;

In an argon glove box, metallic Al was deposited into a film on the first negative electrode layer by vacuum vapor deposition to form a metallic layer. The amount of metallic layer supported was 0.1 mg/cm² and the thickness thereof was 0.4 µm.

### (Comparative Example 2)

A test battery (a sodium-ion secondary battery) was produced in the same manner as in Example 9 except that the following metallic layer was formed instead of the second negative electrode layer, and underwent the charge-discharge test.

### Making of Metallic Layer;

In an argon glove box, metallic Al was deposited into a film on the first negative electrode layer by vacuum vapor deposition to form a metallic layer. The amount of metallic layer supported was 0.1 mg/cm² and the thickness thereof was 0.4 µm.

### (Comparative Example 3)

A test battery (a sodium-ion secondary battery) was produced in the same manner as in Example 1 except that the following metallic layer was formed instead of the second negative electrode layer, and underwent the charge-discharge test.

### Making of Metallic Layer;

In an argon glove box, metallic Sn was deposited into a film on the first negative electrode layer by vacuum vapor deposition to form a metallic layer. The amount of metallic layer supported was 0.3 mg/cm² and the thickness thereof was 1.2 µm.

The results are shown in Table 4 below.

**[Table 4]**

| | | Comp. Ex. 1 | Comp. Ex. 2 | Comp. Ex. 3 |
|---|---|---|---|---|
| Positive Electrode Layer | Amount of Positive-Electrode Active Material Supported (mg/cm²) | 10.5 | 10.5 | 10.5 |
| | Capacity (mAh/cm²) | 1.02 | 1.02 | 1.02 |
| First Negative Electrode Layer | Negative-Electrode Active Material | hard carbon | hard carbon | hard carbon |
| | Solid Electrolyte | NASICON | C-NASICON | NASICON |
| | Amount of Negative-Electrode Active Material Supported (mg/cm²) | 3.5 | 3.5 | 3.5 |
| | Capacity (mAh/cm²) | 1.05 | 1.05 | 1.05 |
| Metallic Layer | Type | Al | Al | Sn |
| | Amount Supported (mg/cm²) | 0.10 | 0.10 | 0.30 |
| | Thickness (µm ) | 0.4 | 0.4 | 1.2 |
| Battery Characteristics | Charge Capacity (mAh/cm²) | 1.02 | 1.02 | 1.02 |
| | Discharge Capacity (mAh/cm²) | 0.71 | 0.79 | 0.75 |
| | Initial Charge-Discharge Efficiency (%) | 69.6% | 77.5% | 73.5% |
| | Operating Voltage (V) | 3.01 | 3.04 | 2.83 |

### [Reference Signs List]

1, 21, 31, 41, 51, 61, 71, 81, 91 ... negative electrode layer
10, 20, 30, 40, 50, 60, 70, 80, 90 ... sodium-ion secondary battery
2 ... solid electrolyte layer
2a ... first principal surface
2b ... second principal surface
3 ... positive electrode layer
4, 24, 34, 64 ... first negative electrode layer
5, 65 ... second negative electrode layer
6, 46, 56, 86, 96 ... first negative-electrode active material
7, 52a ... solid electrolyte
27, 37 ... mixture phase
47, 57, 87, 97 ... second negative-electrode active material
62 ... electrolytic solution
68 ... separator
69 ... current collector

## Claims

1. A negative electrode for a sodium-ion secondary battery containing:
a first negative-electrode active material containing a carbon material; and
a second negative-electrode active material containing a sodium-containing alloy.

2. The negative electrode for a sodium-ion secondary battery according to claim 1,
the negative electrode comprising:
a first negative electrode layer containing the first negative-electrode active material; and
a second negative electrode layer containing the second negative-electrode active material.

3. The negative electrode for a sodium-ion secondary battery according to claim 2, wherein the second negative electrode layer doubles as a current collector.

4. The negative electrode for a sodium-ion secondary battery according to claim 1 or 2, wherein the sodium-containing alloy is an alloy containing Na and Sn.

5. The negative electrode for a sodium-ion secondary battery according to claim 4, wherein the sodium-containing alloy is NaₓSn (where 0.16 ≤ x ≤ 3.75).

6. The negative electrode for a sodium-ion secondary battery according to claim 2 or 3, wherein the second negative electrode layer has a thickness of not less than 0.3 µm and not more than 10 µm.

7. The negative electrode for a sodium-ion secondary battery according to claim 1 or 2, wherein the carbon material is hard carbon.

8. The negative electrode for a sodium-ion secondary battery according to claim 1 or 2, further containing a solid electrolyte.

9. The negative electrode for a sodium-ion secondary battery according to claim 8, wherein the solid electrolyte contains at least one type of material selected from the group consisting of β"-alumina, β-alumina, and NASICON crystals.

10. A sodium-ion secondary battery comprising the negative electrode for a sodium-ion secondary battery according to claim 1 or 2.

11. The sodium-ion secondary battery according to claim 10,
further comprising a solid electrolyte layer,
wherein the negative electrode for a sodium-ion secondary battery is provided on one principal surface of the solid electrolyte layer.

12. The sodium-ion secondary battery according to claim 11, wherein the negative electrode for a sodium-ion secondary battery comprises:
a first negative electrode layer provided on the solid electrolyte layer side and containing the first negative-electrode active material; and
a second negative electrode layer provided on a principal surface of the first negative electrode layer located on an opposite side to the solid electrolyte layer and containing the second negative-electrode active material.
